(19)

Europäisches
Patentamt

European
Patent Office

Office européen
des brevets

(11) **EP 4 184 361 A1**

(12) **EUROPEAN PATENT APPLICATION**
published in accordance with Art. 153(4) EPC

(43) Date of publication:
**24.05.2023 Bulletin 2023/21**

(21) Application number: **21841778.0**

(22) Date of filing: **15.07.2021**

(51) International Patent Classification (IPC):
**G06F 21/60** $^{(2013.01)}$

(86) International application number:
**PCT/CN2021/106469**

(87) International publication number:
**WO 2022/012621 (20.01.2022 Gazette 2022/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2020 CN 202010695940**

(71) Applicant: **ZTE Corporation**
**Shenzhen, Guangdong 518057 (CN)**

(72) Inventor: **DU, Yongsheng**
**Shenzhen, Guangdong 518057 (CN)**

(74) Representative: **Canzler & Bergmeier**
**Patentanwälte**
**Partnerschaft mbB**
**Despag-Straße 6**
**85055 Ingolstadt (DE)**

(54) **FEDERATED LEARNING METHOD, APPARATUS AND SYSTEM, ELECTRONIC DEVICE AND STORAGE MEDIUM**

(57) The present disclosure provides a federated learning method, apparatus and system, an electronic device, and a computer readable storage medium. The federated learning method is applied to an ith-layer node, i being an integer equal to or greater than 2 and equal to or less than (N-1), and (N-1) being the number of layers of the federated learning. Said method comprises: having received a corresponding first gradient reported by at least one (i-1)th-layer node under the ith-layer node; and calculating an updated (i-1)th-layer global gradient corresponding to the ith-layer node according to the first gradient corresponding to the at least one (i-1)th-layer node and an (i-1)th-layer weight indicator corresponding to the ith-layer node, the (i-1)th-layer weight indicator being a communication indicator.

FIG. 4

**Description**

CROSS REFERENCE TO RELATED APPLICATIONS

The present disclosure claims the priority to Chinese Patent Application No. 202010695940.2 entitled "A federated learning method, apparatus and system, electronic device, and storage medium" and filed with the CNIPA on July 17, 2020, the entire contents of which are incorporated herein by reference.

TECHNICAL FIELD

Embodiments of the present disclosure relate to, but are not limited to, the field of artificial intelligence, and in particular, to a federated learning method, apparatus and system, an electronic device, and a computer-readable storage medium.

BACKGROUND

If intelligentization is carried out in the communication field where digitalization is applied most maturely, a computational load resource requirement caused by the intelligentization is obviously faced with such a problem that, in view of a high timeliness requirement in the communication field, a few remaining computing power resources of existing network devices can hardly meet a real-time computing power requirement of development of communication intelligentization at present.

For real-time computing requirements of stock networks, a current main solution is to migrate computation of a network device (i.e., a central compute node in a network) from inside the network device to an edge of a mobile access network to meet the real-time intelligent computing requirement at the edge side, that is, a node (i.e., a Near Collect Computer Node, NCCN) with data acquisition capability and computing capability is deployed near a network element side in the network. This solution can play a transitional role for meeting the real-time computing requirement brought by the intelligentization of existing networks such as 3G networks, 4G networks, and part of 5G networks.

Introducing federated learning into such computing architecture can not only protect privacy of user data at the network element side but also make full use of the few computing power resources of the network devices and avoid bandwidth consumption caused by data migration. However, optimization results obtained by current federated learning methods are usually not the best optimization results.

SUMMARY

The embodiments of the present disclosure provide a federated learning method, apparatus and system, an electronic device, and a computer-readable storage medium.

In the first aspect, an embodiment of the present disclosure provides a federated learning method applied to a layer-i node, with i being any integer greater than or equal to 2 and less than or equal to (N-1), and (N-1) being the number of layers of federated learning, including: receiving a first gradient corresponding to and reported by at least one layer-(i-1) node under the layer-i node; and calculating an updated layer-(i-1) global gradient corresponding to the layer-i node according to the first gradient corresponding to the at least one layer-(i-1) node and a layer-(i-1) weight index corresponding to the layer-i node, wherein the layer-(i-1) weight index is a communication index.

In the second aspect, an embodiment of the present disclosure provides a federated learning method applied to a layer-1 node, including: reporting an updated gradient corresponding to the layer-1 node to a layer-2 node; and receiving an updated layer-j global gradient sent by the layer-2 node; wherein the layer-j global gradient is obtained through calculation according to a first gradient corresponding to at least one layer-j node and a layer-j weight index corresponding to a layer-(j+1) node; the layer-j weight index is a communication index; and j is any integer greater than or equal to 1 and less than or equal to (N-1), and (N-1) is the number of layers of federated learning.

In the third aspect, an embodiment of the present disclosure provides a federated learning method applied to a layer-N node or a layer-N subsystem, with (N-1) being the number of layers of federated learning, including: receiving a layer-(N-2) global gradient corresponding to and reported by at least one layer-(N-1) node under the layer-N node or the layer-N subsystem; and calculating a layer-(N-1) global gradient corresponding to the layer-N node or the layer-N subsystem according to the layer-(N-2) global gradient corresponding to the at least one layer-(N-1) node and a layer-(N-1) weight index, wherein the layer-(N-1) weight index is a communication index.

In the fourth aspect, an embodiment of the present disclosure provides an electronic device, including: at least one processor; and a memory having stored thereon at least one program which, when executed by the at least one processor, causes the at least one processor to implement any one of the federated learning methods described above.

In the fifth aspect, an embodiment of the present disclosure provides a computer-readable storage medium having a computer program stored thereon, wherein, when the computer program is executed by a processor, any one of the federated learning methods described above is implemented.

In the sixth aspect, an embodiment of the present disclosure provides a federated learning system, including: a layer-N node or a layer-N subsystem configured to receive a layer-(N-2) global gradient corresponding to and reported by at least one layer-(N-1) node under the layer-N node or the layer-N subsystem, calculate a layer-(N-1) global gradient corresponding to the layer-N node or the layer-N subsystem according to the layer-(N-2) global gradient corresponding to the at least one layer-(N-1) node and a layer-(N-1) weight index which is a communication index, and issue the layer-(N-1) global gradient corresponding to the layer-N node or the layer-N subsystem to the at least one layer-(N-1) node, wherein (N-1) is the number of layers of federated learning; a layer-i node configured to receive a first gradient corresponding to and reported by at least one layer-(i-1) node under the layer-i node, and calculate an updated layer-(i-1) global gradient corresponding to the layer-i node according to the first gradient corresponding to the at least one layer-(i-1) node and a layer-(i-1) weight index corresponding to the layer-i node, wherein the layer-(i-1) weight index is a communication index, the layer-i node being further configured to: issue the updated layer-(i-1) global gradient corresponding to the layer-i node to the layer-(i-1) node; or report the updated layer-(i-1) global gradient corresponding to the layer-i node to a layer-(i+1) node; and receive any one of an updated layer-i global gradient to an updated layer-(N-1) global gradient sent from the layer-(i+1) node, and issue the any one of the updated layer-i global gradient to the updated layer-(N-1) global gradient to the layer-(i-1) node; and a layer-1 node configured to report an updated gradient corresponding to the layer-1 node to a layer-2 node, and receive an updated layer-j global gradient sent by the layer-2 node, wherein the layer-j global gradient is obtained through calculation according to a first gradient corresponding to at least one layer-j node and a layer-j weight index corresponding to a layer-(j+1) node; the layer-j weight index is a communication index; and j is any integer greater than or equal to 1 and less than or equal to (N-1), and (N-1) is the number of layers of federated learning.

With the federated learning method provided by the embodiments of the present disclosure, the communication index is taken as the weight index for the calculation of the global gradient; and since the communication index is a relatively valuable data index for the operators, a result of the model training obtained by performing the model training on the basis of the global gradient calculated with the communication index taken as the weight index is the best result for the operators, thereby improving optimization effect.

BRIEF DESCRIPTION OF DRAWINGS

FIG. 1 is a schematic diagram of architecture of a federated learning system according to an embodiment of the present disclosure;
FIG. 2 is a schematic diagram of architecture of a single-layer federated learning system according to an embodiment of the present disclosure;
FIG. 3 is a schematic diagram of architecture of a two-layer federated learning system according to an embodiment of the present disclosure;
FIG. 4 is a flowchart illustrating a federated learning method according to an embodiment of the present disclosure;
FIG. 5 is a flowchart illustrating a federated learning method according to another embodiment of the present disclosure;
FIG. 6 is a flowchart illustrating a federated learning method according to another embodiment of the present disclosure;
FIG. 7 is a schematic diagram of architecture of a federated learning system according to Examples 1 to 4 of the present disclosure;
FIG. 8 is a schematic diagram of architecture of a federated learning system according to Example 5 of the present disclosure;
FIG. 9 is a block diagram of a federated learning apparatus according to another embodiment of the present disclosure;
FIG. 10 is a block diagram of a federated learning apparatus according to another embodiment of the present disclosure; and
FIG. 11 is a block diagram of a federated learning apparatus according to another embodiment of the present disclosure.

DETAIL DESCRIPTION OF EMBODIMENTS

In order to enable those of ordinary skill in the art to better understand the technical solutions of the present disclosure, a federated learning method, apparatus and system, an electronic device, and a computer-readable storage medium provided by the present disclosure are described in detail below with reference to the drawings.

Exemplary embodiments will be described more fully below with reference to the drawings, but the exemplary embodiments may be embodied in different forms, and should not be interpreted as being limited to the embodiments described herein. Rather, the exemplary embodiments are provided to make the present disclosure thorough and complete, and are intended to enable those of ordinary skill in the art to fully understand the scope of the present disclosure.

The embodiments of the present disclosure and the features therein may be combined with each other if no conflict is incurred.

The term "and/or" used herein includes any combination and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "comprise" and/or "be made of" used herein indicate(s) the presence of features, integers, operations, elements and/or components, but do not exclude the presence or addition of at least one other feature, integer, operation, element, component and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

A current horizontal federated learning method generally includes that:

a participant carries out model training with local data to obtain an updated gradient, and performs privacy protection processing on the updated gradient through encryption, Differential Privacy (DP) or secret sharing technology to obtain the privacy protected gradient; and the privacy protected gradient is sent to a central server;

the central server decrypts the privacy protected gradient corresponding to at least one participant to obtain the updated gradient corresponding to the at least one participant, calculates an updated global gradient according to the updated gradient corresponding to the at least one participant, and respectively issues the updated global gradient to each participant; and

the participant updates the model according to the updated global gradient.

In the above horizontal federated learning method, the updated global gradient is generally calculated by the Federated Averaging (FedAvg) algorithm of Google, that is, an average or a weighted average of the updated gradients corresponding to all the participants (or a random part of the participants) is calculated to obtain the updated global gradient, with a weight being the amount of data involved in the training of the participant. The method takes the amount of the data involved in the training of the participant as the weight, but a result of the model training is not the best result for an operator because the amount of the data involved in the training is not equal to the amount of valuable data concerned by the operator; moreover, with the participants not distinguished from each other, customized optimization cannot be realized, with the result that an optimization effect is weakened.

The architecture of a federated learning system provided by the embodiments of the present disclosure is described below.

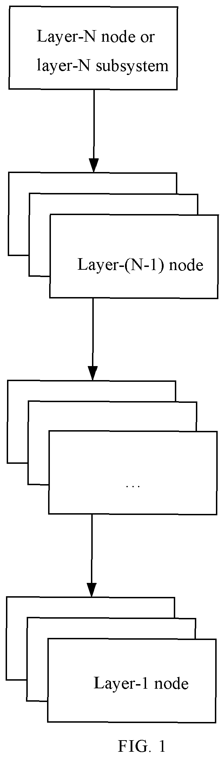

FIG. 1 is a schematic diagram of architecture of a federated learning system according to an embodiment of the present disclosure. As shown in FIG. 1, a federated learning system according to the embodiment of the present disclosure is configured to implement federated learning of (N-1) layers, with N being an integer greater than or equal to 2.

The federated learning of the (N-1) layers according to the embodiments of the present disclosure is implemented by N layers of nodes, or by a layer-1 node to a layer-(N-1) node and a layer-N subsystem; and each of the layer-1 node to the layer-(N-1) node includes one node or more than one node, and a layer-N node or the layer-N subsystem includes one layer-N node alone or one layer-N subsystem alone.

Specifically, the federated learning of the $i^{th}$ layer is implemented by the layer-i node and the layer-(i+1) node, with i being an integer greater than or equal to 1 and less than or equal to (N-2); and the federated learning of the $(N-1)^{th}$ layer is implemented by the layer-(N-1) node and the layer-N node, or by the layer-(N-1) node and the layer-N subsystem.

It should be noted that different layer-(i+1) nodes have different next-layer nodes (i.e., the layer-i nodes).

It should be noted that the layer-1 node may be a Network Element (NE) such as a base station, the layer-2 node to the layer-(N-1) node may be NCCNs, and the layer-N node or the layer-N subsystem may be a node or a subsystem corresponding to an Element Management System (EMS).

It should be noted that the layer-2 node to the layer-(N-1) node may be physical devices or virtual nodes.

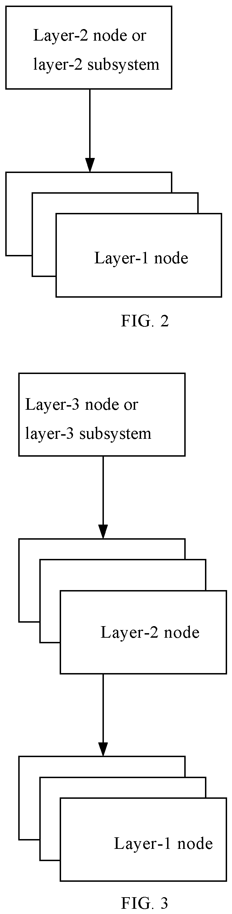

For example, FIG. 2 is a schematic diagram of the architecture of a single-layer federated learning system with federated learning of a single layer taken as an example. As shown in FIG. 2, the single-layer federated learning system realized the federated learning of a single layer, and the federated learning of a single layer is implemented by the layer-1 node and the layer-2 node, or by the layer-1 node and the layer-2 subsystem.

For example, FIG. 3 is a schematic diagram of the architecture of a two-layer federated learning system with federated learning of two layers taken as an example. As shown in FIG. 3, the federated learning of two layers is implemented by the layer-1 node, the layer-2 node, and the layer-3 node, or by the layer-1 node, the layer-2 node, and the layer-3 subsystem. Specifically, the federated learning of the first layer is implemented by the layer-1 node and the layer-2 node, the federated learning of the second layer is implemented by the layer-2 node and the layer-3 node, or by the layer-2 node and the layer-3 subsystem.

A federated learning procedure is described below from the perspective of a side of the layer-1 node, a side of any one of the layer-2 node to the layer-(N-1) node, and a side of the layer-N node or the layer-N subsystem, respectively.

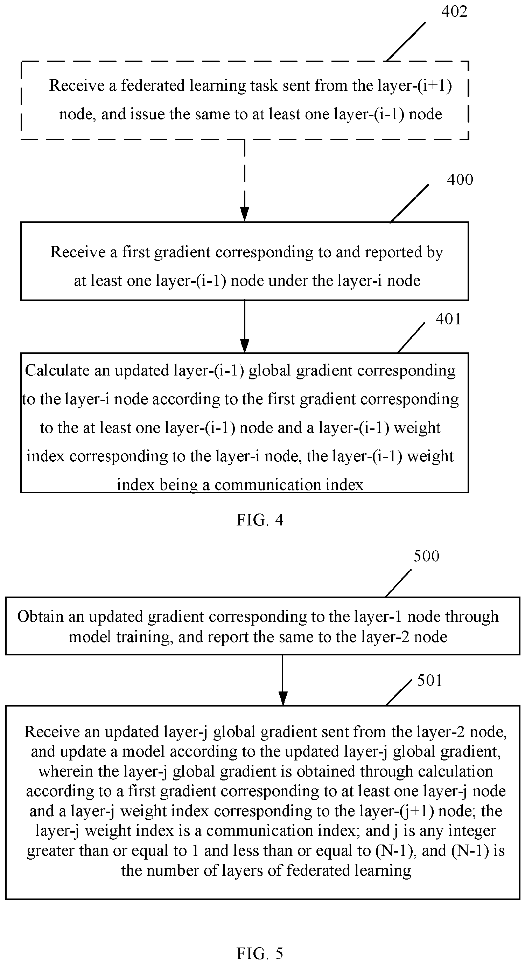

FIG. 4 is a flowchart illustrating a federated learning method according to an embodiment of the present disclosure.

In the first aspect, with reference to FIG. 4, an embodiment of the present disclosure provides a federated learning method applied to the layer-i node, with i being any integer greater than or equal to 2 and less than or equal to (N-1), and (N-1) being the number of layers of federated learning, and the method includes the following operations 400 and 401.

In operation 400, a corresponding first gradient reported by at least one layer-(i-1) node under the layer-i node is received.

In some exemplary embodiments, if i is 2, the first gradient corresponding to the layer-(i-1) node is an updated gradient obtained by performing model training by the layer-(i-1) node.

In some exemplary embodiments, if i is 2, in order to improve security, the first gradient corresponding to the layer-(i-1) node may also be a second gradient corresponding to the layer-(i-1) node, which is obtained by performing privacy protection processing on the updated gradient corresponding to the layer-(i-1) node after the updated gradient is obtained by performing the model training by the layer-(i-1) node.

In some exemplary embodiments, if i is greater than 2 and less than or equal to (N-1), the first gradient corresponding to the layer-(i-1) node is an updated layer-(i-2) global gradient corresponding to the layer-(i-1) node.

In some exemplary embodiments, if i is greater than 2 and less than or equal to (N-1), in order to improve the security, the first gradient corresponding to the layer-(i-1) node may also be a privacy protected layer-(i-2) global gradient corresponding to the layer-(i-1) node, which is obtained by performing, by the layer-(i-1) node, privacy protection processing on the updated layer-(i-2) global gradient corresponding to the layer-(i-1) node.

In some exemplary embodiments, the privacy protection processing may be implemented through the encryption, the DP, or the secret sharing technology, or may be implemented with other methods, and the specific implementations are not used to limit the scope of the embodiments of the present disclosure.

In operation 401, an updated layer-(i-1) global gradient corresponding to the layer-i node is calculated according to the first gradient corresponding to the at least one layer-(i-1) node and a layer-(i-1) weight index corresponding to the layer-i node; and the layer-(i-1) weight index is a communication index.

In some exemplary embodiments, the communication index includes at least one of: an average delay, traffic, uplink and downlink traffic, or a weighted average of the traffic and the uplink and downlink traffic.

In some exemplary embodiments, the weight indexes corresponding to different nodes in the same layer may be the same or different, and the weight indexes corresponding to different nodes in different layers may be the same or different. For example, in order to realize timeliness of network optimization, the weight indexes corresponding to the different nodes in the same layer may be set to be the same, that is, at least one of the different nodes in the same layer is used to realize optimization of one same weight index, which is similar to what happens in a distributed system; and in order to realize personalization of the network optimization, the weight indexes corresponding to the different nodes in the same layer may be set to be different: specifically, the weight indexes corresponding to any two nodes in the same layer may be set to be different, or the weight indexes corresponding to a part of the nodes in the same layer may be set to be the same, while the weight indexes corresponding to the other part of the nodes in the same layer may be set to be different, which depends on actual conditions.

In some exemplary embodiments, the layer-(i-1) weight index corresponding to the layer-i node may be uniformly set in the layer-N node or the layer-N subsystem; and when the layer-(i-1) weight index corresponding to the layer-i node is specifically set, a corresponding relationship between the layer-i node and the layer-(i-1) weight index may be set. With the layer-(i-1) weight index corresponding to the layer-i node such set, when the layer-N node or the layer-N subsystem issues a federated learning task layer by layer, the layer-(i-1) weight index corresponding to the layer-i node may be issued to the layer-i node layer by layer together with the federated learning task, or the layer-(i-1) weight index corresponding to the layer-i node may be separately issued to the layer-i node layer by layer, or the layer-(i-1) weight index corresponding to the layer-i node may not be issued to the layer-i node layer by layer together with the federated learning task.

In some exemplary embodiments, the layer-(i-1) weight index corresponding to the layer-i node may also be set on the corresponding layer-i node, so that the process of issuing the layer-(i-1) weight index corresponding to the layer-i node to the layer-1 node layer by layer by the layer-N node or the layer-N subsystem may be omitted, thereby saving network overhead.

In some exemplary embodiments, calculating the updated layer-(i-1) global gradient corresponding to the layer-i node according to the first gradient corresponding to the at least one layer-(i-1) node and the layer-(i-1) weight index corresponding to the layer-i node includes:

acquiring a layer-(i-1) weight index value corresponding to the at least one layer-(i-1) node according to the layer-(i-1) weight index corresponding to the layer-i node; and
calculating a weighted average of the first gradient corresponding to the at least one layer-(i-1) node with the layer-(i-1) weight index value corresponding to the at least one layer-(i-1) node taken as a weight, to obtain the updated layer-(i-1) global gradient corresponding to the layer-i node.

9     **EP 4 184 361 A1**     10

In some exemplary embodiments, if the first gradient corresponding to the layer-(i-1) node is the second gradient corresponding to the layer-(i-1) node or the privacy protected layer-(i-2) global gradient corresponding to the layer-(i-1) node, the first gradient corresponding to the layer-(i-1) node needs to be subjected to privacy protection removing processing, i.e., a reverse processing of the privacy protection processing. For example, if the privacy protection processing is the encryption, the privacy protection removing processing is decryption, and so on for the other privacy protection processing methods; and then the weighted average of the first gradient corresponding to the at least one layer-(i-1) node, which is subjected to the privacy protection removing processing, is calculated.

In some exemplary embodiments, for some privacy protection processing methods such as homomorphic encryption, the weighted average of the first gradient corresponding to the at least one layer-(i-1) node may also be directly calculated without performing the privacy protection removing processing on the first gradient corresponding to the layer-(i-1) node.

In some exemplary embodiments, the layer-(i-1) weight index value corresponding to the layer-(i-1) node may be obtained according to the layer-(i-1) weight index values corresponding to all the layer-1 nodes under the layer-(i-1) node, and may be specifically obtained in a plurality of ways, for example, after each layer-1 node respectively obtains the corresponding layer-(i-1) weight index value, the layer-1 node reports the corresponding layer-(i-1) weight index value to the layer-(i-1) node layer by layer, and the layer-(i-1) node performs calculation in a unified manner; for example, after each layer-1 node respectively obtains the corresponding layer-(i-1) weight index value, the layer-1 node reports the corresponding layer-(i-1) weight index value to the layer-(i-1) node layer by layer, and calculation is performed once each time the corresponding layer-(i-1) weight index value is reported to an upper layer; for example, the layer-(i-1) node acquires related information of the layer-1 nodes used for the calculation of the layer-(i-1) weight index values, the layer-(i-1) weight index value corresponding to each layer-1 node is respectively calculated based on the related information of the layer-1 nodes, and then the layer-(i-1) weight index value corresponding to the layer-(i-1) node is calculated; and so on. Apparently, the layer-(i-1) weight index value corresponding to the layer-(i-1) node may also be obtained in some other ways, and the specific ways of obtaining the layer-(i-1) weight index value corresponding to the layer-(i-1) node are not used to limit the scope of the embodiments of the present disclosure.

In some exemplary embodiments, the updated layer-(i-1) global gradient corresponding to the layer-i node is calculated by the formula

$$GRA_i = \sum_{m=1}^{M} GRA_{m\ (i-1)} KPI_{m\ (i-1)} ;$$

where $GRA_i$ is the updated layer-(i-1) global gradient corresponding to the layer-i node, $GRA_{m(i-1)}$ is the first gradient corresponding to the $m^{th}$ layer-(i-1) node under the layer-i node, and $KPI_{m(i-1)}$ is the layer-(i-1) weight index value corresponding to the $m^{th}$ layer-(i-1) node under the layer-i node.

In some exemplary embodiments, if the weight index is the average delay, merely the global gradient with the average delay taken as the weight needs to be calculated.

In some exemplary embodiments, if the weight index is the traffic, merely the global gradient with the traffic taken as the weight needs to be calculated.

In some exemplary embodiments, if the weight index is the uplink and downlink traffic, merely the global gradient with the uplink and downlink traffic taken as the weight needs to be calculated.

In some exemplary embodiments, if the weight index is the weighted average of the traffic and the uplink and downlink traffic, the global gradient with the traffic taken as the weight and the global gradient with the uplink and downlink traffic taken as the weight need to be calculated respectively, and then a weighted average of the global gradient with the traffic taken as the weight and the global gradient with the uplink and downlink traffic as the weight needs to be calculated.

In some exemplary embodiments, before receiving the corresponding first gradient reported by the at least one layer-(i-1) node under the layer-i node, the method further includes:

operation 402, receiving a federated learning task sent from the layer-(i+1) node, and issuing the federated learning task to the at least one layer-(i-1) node.

In some exemplary embodiments, the federation learning task may be issued to the layer-(N-1) node after a service application in the layer-N node or the layer-N subsystem initiates a service federation learning procedure request, and then issued to the layer-1 node layer by layer, so that the layer-i node issues the federation learning task to the at least one layer-(i-1) node after receiving the federation learning task sent by the layer-(n+1) node.

In some exemplary embodiments, the service federation learning procedure request includes a range of trained layer-1 nodes, the layer-N node or layer-N subsystem acquires the range of trained layer-1 nodes from the service federation learning procedure request, and determines a range of the layer-(N-1) nodes to which the federation learning task needs to be issued based on the range of trained layer-1 nodes. How to determine the range of the layer-(N-1) nodes to which the federation learning task needs to be issued based on the range of trained layer-1 nodes specifically depends on the lay-

6

er-(N-1) nodes connected to the layer-1 nodes within the range of trained layer-1 nodes, for example, the range of the layer-(N-1) nodes to which the federation learning task needs to be issued is determined based on the topology shown in FIG. 1.

In some exemplary embodiments, when the layer-i node issues the federated learning task to the layer-(i-1) node, the range of trained layer-1 nodes may also be issued, so that the layer-(i-1) node may determine a range of the (i-2) layer nodes to which the federated learning task needs to be issued according to the range of trained layer-1 nodes. How to determine the range of the (i-2) layer nodes to which the federated learning task needs to be issued according to the range of trained layer-1 nodes specifically depends on the layer (i-2) nodes connected to the layer-1 nodes within the range of trained layer-1 nodes, for example, the range of the (i-2) layer nodes to which the federated learning task needs to be issued is determined based on the topology shown in FIG. 1.

In some exemplary embodiments, if a current state is that the federated learning procedure of the (i-1)th layer is carried out, after calculating the updated layer-(i-1) global gradient corresponding to the layer-i node according to the first gradient corresponding to the at least one layer-(i-1) node and the layer-(i-1) weight index corresponding to the layer-i node, the method further includes:

issuing the updated layer-(i-1) global gradient corresponding to the layer-i node to the layer-(i-1) node.

In some exemplary embodiments, the layer-i node issues the updated layer-(i-1) global gradient corresponding to the layer-i node to the layer-(i-1) node, and the updated layer-(i-1) global gradient corresponding to the layer-i node is then issued to the layer-1 node layer by layer, so as to allow the layer-1 node to update the model according to the layer-(N-1) global gradient.

In some exemplary embodiments, if the current state is that the federated learning procedure of any one of the ith layer to the (N-1)th layer is carried out, after calculating the updated layer-(i-1) global gradient corresponding to the layer-i node according to the first gradient corresponding to the at least one layer-(i-1) node and the layer-(i-1) weight index corresponding to the layer-i node, the method further includes:

reporting the updated layer-(i-1) global gradient corresponding to the layer-i node to the layer-(i+1) node; and receiving any one of an updated layer-i global gradient to an updated layer-(N-1) global gradient sent by the layer-(i+1) node, and issuing the any one of the updated layer-i global gradient to the updated layer-(N-1) global gradient to the layer-(i-1) node.

In some exemplary embodiments, the layer-i node issues the any one of the updated layer-i global gradient to the updated layer-(N-1) global gradient to the layer-(i-1) node, and the any one of the updated layer-i global gradient to the updated layer-(N-1) global gradient to the layer-(i-1) node is then issued to the layer-1 node layer by layer, so as to allow the layer-1 node to update the model according to the layer-(N-1) global gradient.

In some exemplary embodiments, after the layer-1 node receives the federated learning task, the layer-1 node performs model training according to the federated learning task to obtain the updated gradient, and reports the corresponding updated gradient to the layer-2 node; the layer-2 node calculates the updated layer-1 global gradient corresponding to the layer-2 node according to the updated gradient corresponding to at least one layer-1 node and the layer-1 weight index corresponding to the layer-2 node; if the current state is that the federated learning procedure of the first layer is carried out, the layer-2 node issues the corresponding updated layer-1 global gradient to the layer-1 node, and the layer-1 node updates the model according to the updated layer-1 global gradient; if the current state is that the federated learning procedure of any one from the second layer to the (N-1)th layer is carried out, the layer-2 node reports the corresponding updated layer-1 global gradient to the layer-3 node; and when i is greater than 2 and less than or equal to (N-1), the layer-i node calculates the updated layer-(i-1) global gradient corresponding to the layer-i node according to the updated (i-2) layer global gradient corresponding to the at least one layer-(i-1) node and the layer-(i-1) weight index corresponding to the layer-i node; if the current state is that the federate learning procedure of the (i-1)th layer is carried out, the layer-i node issues the corresponding updated layer-(i-1) global gradient to the layer-(i-1) node, the corresponding updated layer-(i-1) global gradient is then issued to the layer-1 node layer by layer, and the layer-1 node updates the model according to the updated layer-(i-1) global gradient; and if the current state is that the federated learning procedure of any one from the ith layer to the (N-1)th layer is carried out, the layer-i node reports the corresponding updated layer-(i-1) global gradient to layer-(i+1) node.

With the federated learning method provided by the embodiments of the present disclosure, the communication index is taken as the weight index for the calculation of the global gradient; and since the communication index is a relatively valuable data index for the operators, a result of the model training obtained by performing the model training on the basis of the global gradient calculated with the communication index taken as the weight index is the best result for the operators, thereby improving the optimization effect.

FIG. 5 is a flowchart illustrating a federated learning method according to another embodiment of the present disclosure.

In the second aspect, with reference to FIG. 5, another embodiment of the present disclosure provides a federated learning method applied to the layer-1 node, and the method includes the following operations 500 and 501.

In operation 500, an updated gradient corresponding to the layer-1 node is reported to the layer-2 node.

In some exemplary embodiments, in order to improve the security, the layer-1 node may perform privacy protection processing on the updated gradient corresponding to the layer-1 node to obtain a privacy protected gradient corresponding to the layer-1 node, and then report the privacy protected gradient corresponding to the layer-1 node to the layer-2 node.

After receiving the privacy protected gradient corresponding to the layer-1 node, the layer-2 node needs to first perform privacy protection removing processing on the privacy protected gradient corresponding to the layer-1 node, that is, performing a reverse processing of the privacy protection processing. For example, if the privacy protection processing is the encryption, the privacy protection removing processing is the decryption, and so on for the other privacy protection processing methods; and then a weighted average of the updated gradient corresponding to at least one layer-node is calculated.

Or, for some privacy protection processing methods such as the homomorphic encryption, the layer-2 node may also directly calculate a weighted average of the privacy protected gradient corresponding to at least one layer-1 node without performing the privacy protection removing processing on the privacy protected gradient corresponding to the layer-1 node.

In operation 501, an updated layer-j global gradient sent from the layer-2 node is received; the layer-j global gradient is obtained through calculation according to a first gradient corresponding to at least one layer-j node and a layer-j weight index corresponding to the layer-(j+1) node; the layer-j weight index is a communication index; and j is any integer greater than or equal to 1 and less than or equal to (N-1), and (N-1) is the number of layers of federated learning.

In some exemplary embodiments, if j is 1, the first gradient corresponding to the layer-j node is an updated gradient corresponding to the layer-j node.

In some exemplary embodiments, if j is 1, in order to improve the security, the first gradient corresponding to the layer-j node may also be a second gradient corresponding to the layer-j node, which is obtained by performing privacy protection processing on the updated gradient corresponding to the layer-j node after the updated gradient is obtained by performing model training by the layer-j node.

In some exemplary embodiments, if j is greater than 1 and less than or equal to (N-1), the first gradient corresponding to the layer-j node is an updated layer-(j-1) global gradient corresponding to the layer-j node.

In some exemplary embodiments, if j is greater than 1 and less than or equal to (N-1), in order to improve the security, the first gradient corresponding to the layer-j node may also be a privacy protected layer-(j-1) global gradient corresponding to the layer-j node, which is obtained by performing, by the layer-j node, privacy protection processing on the updated layer-(j-1) global gradient corresponding to the layer-j node.

In some exemplary embodiments, the privacy protection processing may be implemented through the encryption, the DP, or the secret sharing technology, or may be implemented with other methods, but the specific implementations are not used to limit the scope of the embodiments of the present disclosure.

In some exemplary embodiments, the communication index includes at least one of: an average delay, traffic, uplink and downlink traffic, or a weighted average of the traffic and the uplink and downlink traffic.

In some exemplary embodiments, a delay refers to a delay between the layer-1 node sending a data request and the layer-1 node receiving data, or a delay between sending a website access request and receiving website contents.

In some exemplary embodiments, the weight indexes corresponding to different nodes in the same layer are the same or different, and the weight indexes corresponding to different nodes in different layers are the same or different. For example, in order to realize the timeliness of the network optimization, the weight indexes corresponding to the different nodes in the same layer may be set to be the same, that is, at least one of the different nodes in the same layer is used to realize the optimization of one same weight index, which is similar to what happens in the distributed system; and in order to realize the personalization of the network optimization, the weight indexes corresponding to the different nodes in the same layer may be set to be different: specifically, the weight indexes corresponding to any two nodes in the same layer may be set to be different, or the weight indexes corresponding to a part of the nodes in the same layer may be set to be the same, while the weight indexes corresponding to the other part of the nodes in the same layer may be set to be different, which depends on actual conditions.

In some exemplary embodiments, the layer-j weight index corresponding to the layer-(j+1) node may be uniformly set in the layer-N node or the layer-N subsystem; and when the layer-j weight index corresponding to the layer-(j+1) node is specifically set, a corresponding relationship between the layer-(j+1) node and the layer-j weight index may be set. With the layer-j weight index corresponding to the layer-(j+1) node such set, when the layer-N node or the layer-N subsystem issues a federated learning task layer by layer, the layer-j weight index corresponding to the layer-(j+1) node may be issued to the layer-(j+1) node layer by layer together with the federated learning task, or the layer-j weight index corresponding to the layer-(j+1) node may be separately issued to the layer-(j+1) node layer by layer, or the layer-j weight index corresponding to the layer-(j+1) node may not be issued to the layer-(j+1) node layer by layer together with the federated learning task.

In some exemplary embodiments, the layer-j weight index corresponding to the layer-(j+1) node may also be set on the corresponding layer-(j+1) node, so that the process of issuing the layer-j weight index corresponding to the layer-(j+1) node to the layer-(j+1) node layer by layer by the layer-N node or the layer-N subsystem may be omitted, thereby saving the network overhead.

In some exemplary embodiments, calculating the layer-j global gradient according to the first gradient corresponding to the at least one layer-j node and the layer-j weight index corresponding to the layer-(j+1) node includes:

acquiring a layer-j weight index value corresponding to the at least one layer-j node according to the layer-j weight index corresponding to the layer-(j+1) node; and

calculating a weighted average of the first gradient corresponding to the at least one layer-j node with the layer-j weight index value corresponding to the at least one layer-j node taken as a weight, and obtaining the updated layer-j global gradient corresponding to the layer-(j+1) node.

In some exemplary embodiments, if the first gradient corresponding to the layer-j node is the second gradient corresponding to the layer-j node, or the privacy protected layer-(j-1) global gradient corresponding to the layer-j node, the first gradient corresponding to the layer-j node needs to be first subjected to privacy protection removing processing, i.e., the reverse processing of the privacy protection processing. For example, if the privacy protection processing is the encryption, the privacy protection removing processing is the decryption, and so on for the other privacy protection processing methods; and then the weighted average of the first gradient corresponding to the at least one layer-j node, which is subjected to the privacy protection removing processing, is calculated.

In some exemplary embodiments, for some privacy protection processing methods such as the homomorphic encryption, the weighted average of the first gradient corresponding to the at least one layer-j node may also be directly calculated without performing the privacy protection removing processing on the first gradient corresponding to the layer-j node.

In some exemplary embodiments, the layer-j weight index value corresponding to the layer-j node may be obtained according to the layer-j weight index values corresponding to all the layer-1 nodes under the layer-j node, and may be specifically obtained in a plurality of ways, for example, after each layer-1 node respectively obtains the corresponding layer-j weight index value, the layer-1 node reports the corresponding layer-j weight index value to the layer-j node layer by layer, and the layer-j node performs calculation in a unified manner; for example, after each layer-1 node respectively obtains the corresponding layer-j weight index value, the layer-1 node reports the corresponding layer-j weight index value to the layer-j node layer by layer, and calculation is performed once each time the corresponding layer-j weight index value is reported to an upper layer; for example, the layer-j node acquires related information of the layer-1 nodes used for the calculation of the layer-j weight index values, the layer-j weight index value corresponding to each layer-1 node is calculated based on the related information of the layer-1 nodes, respectively, and then the layer-j weight index value corresponding to the layer-j node is calculated; and so on. Apparently, the layer-j weight index value corresponding to the layer-j node may also be obtained in some other ways, and the specific ways of obtaining the layer-j weight index value corresponding to the layer-j node are not used to limit the scope of the embodiments of the present disclosure.

In some exemplary embodiments, the updated layer-(j-1) global gradient corresponding to the layer-j node is calculated by the formula

$$GRA_j = \sum_{m=1}^{M} GRA_{m\,(j-1)} KPI_{m\,(j-1)} ;$$

where $GRA_j$ is the updated layer-(j-1) global gradient corresponding to the layer-j node, $GRA_{m(j-1)}$ is the first gradient corresponding to the $m^{th}$ layer-(j-1) node under the layer-j node, and $KPI_{m(j-1)}$ is the layer-(j-1) weight index value corresponding to the $m^{th}$ layer-(j-1) node under the layer-j node.

In some exemplary embodiments, if the weight index is the average delay, merely the global gradient with the average delay taken as the weight needs to be calculated.

In some exemplary embodiments, if the weight index is the traffic, merely the global gradient with the traffic taken as the weight needs to be calculated.

In some exemplary embodiments, if the weight index is the uplink and downlink traffic, merely the global gradient with the uplink and downlink traffic taken as the weight needs to be calculated.

In some exemplary embodiments, if the weight index is the weighted average of the traffic and the uplink and downlink traffic, the global gradient with the traffic taken as the weight and the global gradient with the uplink and downlink traffic taken as the weight need to be calculated respectively, and then a weighted average of the global gradient with the traffic taken as the weight and the global gradient with the uplink and downlink traffic as the weight needs to be calculated.

In some exemplary embodiments, before reporting the updated gradient corresponding to the layer-1 node to the layer-2 node, the method further includes: performing model training to obtain the updated gradient corresponding to the layer-1 node.

Correspondingly, after receiving the updated layer-j global gradient sent from the layer-2 node, the method further includes:
updating a model according to the updated layer-j global gradient.

In some exemplary embodiments, the updated gradient corresponding to the layer-1 node may be obtained by performing model training according to the federated learning task.

In some exemplary embodiments, the federation learning task may be issued to the layer-(N-1) node after a service application in the layer-N node or the layer-N subsystem initiates a service federation learning procedure request, and then issued to the layer-1 node layer by layer, so that the layer-1 node may perform the model training according to the federation learning task to obtain the updated gradient corresponding to the layer-1 node after receiving the federation learning task sent by the layer-2 node.

With the federated learning method provided by the embodiments of the present disclosure, the communication index is taken as the weight index for the calculation of the global gradient; and since the communication index is the relatively valuable data index for the operators, the result of the model training obtained by performing the model training on the basis of the global gradient calculated with the communication index taken as the weight index is the best result for the operators, thereby improving the optimization effect.

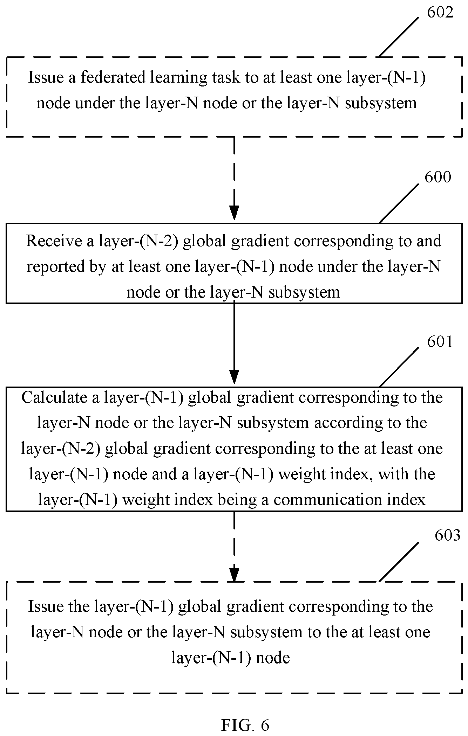

FIG. 6 is a flowchart illustrating a federated learning method according to another embodiment of the present disclosure.

In the third aspect, with reference to FIG. 6, another embodiment of the present disclosure provides a federated learning method applied to the layer-N node or the layer-N subsystem, with (N-1) being the number of layers of federated learning, and the method includes:

operation 600, receiving a corresponding layer-(N-2) global gradient reported by at least one layer-(N-1) node under the layer-N node or the layer-N subsystem; and
operation 601, calculating a layer-(N-1) global gradient corresponding to the layer-N node or the layer-N subsystem according to the layer-(N-2) global gradient corresponding to the at least one layer-(N-1) node and a layer-(N-1) weight index, with the layer-(N-1) weight index being a communication index.

In some exemplary embodiments, the communication index includes at least one of:

an average delay, traffic, uplink and downlink traffic, or a weighted average of the traffic and the uplink and downlink traffic.

In some exemplary embodiments, calculating the layer-(N-1) global gradient corresponding to the layer-N node or the layer-N subsystem according to the layer-(N-2) global gradient corresponding to the at least one layer-(N-1) node and the layer-(N-1) weight index includes:
acquiring a layer-(N-1) weight index value corresponding to the at least one layer-(N-1) node according to the layer-(N-1) weight index; and calculating a weighted average of the layer-(N-2) global gradient corresponding to the at least one layer-(N-1) node with the layer-(N-1) weight index value corresponding to the at least one layer-(N-1) node taken as a weight, and obtaining the layer-(N-1) global gradient corresponding to the layer-N node or the layer-N subsystem.

In some exemplary embodiments, the layer-(N-1) weight index value corresponding to the layer-(N-1) node may be obtained according to the layer-(N-1) weight index values corresponding to all the layer-1 nodes under the layer-(N-1) node, and may be specifically obtained in a plurality of ways. For example, after each layer-1 node respectively obtains the corresponding layer-(N-1) weight index value, the layer-1 node reports the corresponding layer-(N-1) weight index value to the layer-(N-1) node layer by layer, and the layer-(N-1) node performs calculation in a unified manner; for example, after each layer-1 node respectively obtains the corresponding layer-(N-1) weight index value, the layer-1 node reports the corresponding layer-(N-1) weight index value to the layer-(N-1) node layer by layer, and calculation is performed once each time the corresponding layer-(N-1) weight index value is reported to an upper layer; for example, the layer-(N-1) node acquires related information of the layer-1 nodes used for the calculation of the layer-(N-1) weight index values, the layer-(N-1) weight index value corresponding to each layer-1 node is respectively calculated based on the related information of the layer-1 nodes, and then the layer-(N-1) weight index value corresponding to the layer-(N-1) node is calculated; and so on. Apparently, the layer-(N-1) weight index value corresponding to the layer-(N-1) node may also be obtained in some other ways, and the specific ways of obtaining the layer-(N-1) weight index value corresponding to the layer-(N-1) node are not used to limit the scope of the embodiments of the present disclosure.

In some exemplary embodiments, the updated layer-(N-1) global gradient corresponding to the layer-N node or the layer-N subsystem is calculated by the formula

$$GRA_N = \sum_{m=1}^{M} GRA_{m\,(N-1)} KPI_{m\,(N-1)} ;$$

where $GRA_N$ is the updated layer-(N-1) global gradient corresponding to the layer-N node or the layer-N subsystem, $GRA_{m(N-1)}$ is a first gradient corresponding to the $m^{th}$ layer-(N-1) node under the layer-N node or the layer-N subsystem, and $KPI_{m(N-1)}$ is the layer-(N-1) weight index value corresponding to the $m^{th}$ layer-(N-1) node under the layer-N node.

In some exemplary embodiments, if the weight index is the average delay, merely the global gradient with the average delay taken as the weight needs to be calculated.

In some exemplary embodiments, if the weight index is the traffic, merely the global gradient with the traffic taken as the weight needs to be calculated.

In some exemplary embodiments, if the weight index is the uplink and downlink traffic, merely the global gradient with the uplink and downlink traffic taken as the weight needs to be calculated.

In some exemplary embodiments, if the weight index is the weighted average of the traffic and the uplink and downlink traffic, the global gradient with the traffic taken as the weight and the global gradient with the uplink and downlink traffic taken as the weight need to be calculated respectively, and then a weighted average of the global gradient with the traffic taken as the weight and the global gradient with the uplink and downlink traffic as the weight needs to be calculated.

In some exemplary embodiments, before receiving the corresponding layer-(N-2) global gradient reported by the at least one layer-(N-1) node under the layer-N node or the layer-N subsystem, the method further includes:

operation 602, issuing a federated learning task to the at least one layer-(N-1) node under the layer-N node or the layer-N subsystem.

In some exemplary embodiments, the federation learning task may be issued to the layer-(N-1) node after a service application in the layer-N node or the layer-N subsystem initiates a service federation learning procedure request, and then issued to the layer-1 node layer by layer, so that the layer-i node issues the federation learning task to at least one layer-(i-1) node after receiving the federation learning task sent by the layer-(i+1) node.

In some exemplary embodiments, the service federation learning procedure request includes a range of trained layer-1 nodes, the layer-N node or the layer-N subsystem acquires the range of trained layer-1 nodes from the service federation learning procedure request, and determines a range of the layer-(N-1) nodes to which the federation learning task needs to be issued based on the range of trained layer-1 nodes. How to determine the range of the layer-(N-1) nodes to which the federation learning task needs to be issued based on the range of trained layer-1 nodes specifically depends on the layer-(N-1) nodes connected to the layer-1 nodes within the range of trained layer-1 nodes, for example, the range of the layer-(N-1) nodes to which the federation learning task needs to be issued is determined based on the topology shown in FIG. 1.

In some exemplary embodiments, after calculating the layer-(N-1) global gradient corresponding to the layer-N node or the layer-N subsystem according to the layer-(N-2) global gradient corresponding to the at least one layer-(N-1) node and the layer-(N-1) weight index, the method further includes:

operation 603, issuing the layer-(N-1) global gradient corresponding to the layer-N node or the layer-N subsystem to the at least one layer-(N-1) node.

In some exemplary embodiments, the layer-N node or the layer-N subsystem issues the layer-(N-1) global gradient corresponding to the layer-N node or the layer-N subsystem to the at least one layer-(N-1) node, and the layer-(N-1) global gradient corresponding to the layer-N node or the layer-N subsystem is then issued to the layer-1 node layer by layer, so as to allow the layer-1 node to update a model according to the layer-(N-1) global gradient.

With the federated learning method provided by the embodiments of the present disclosure, the communication index is taken as the weight index for the calculation of the global gradient; and since the communication index is the relatively valuable data index for the operators, the result of the model training obtained by performing the model training on the basis of the global gradient calculated with the communication index taken as the weight index is the best result for the operators, thereby improving the optimization effect.

Specific implementations of the federated learning methods provided by the embodiments of the present disclosure are illustrated below by several examples, and the examples listed herein are merely for the convenience of description, but are not intended to limit the scope of the embodiments of the present disclosure.

Example 1

Federated learning procedures of two layers carried out based on a two-layer federated learning system are illustrated by this example.

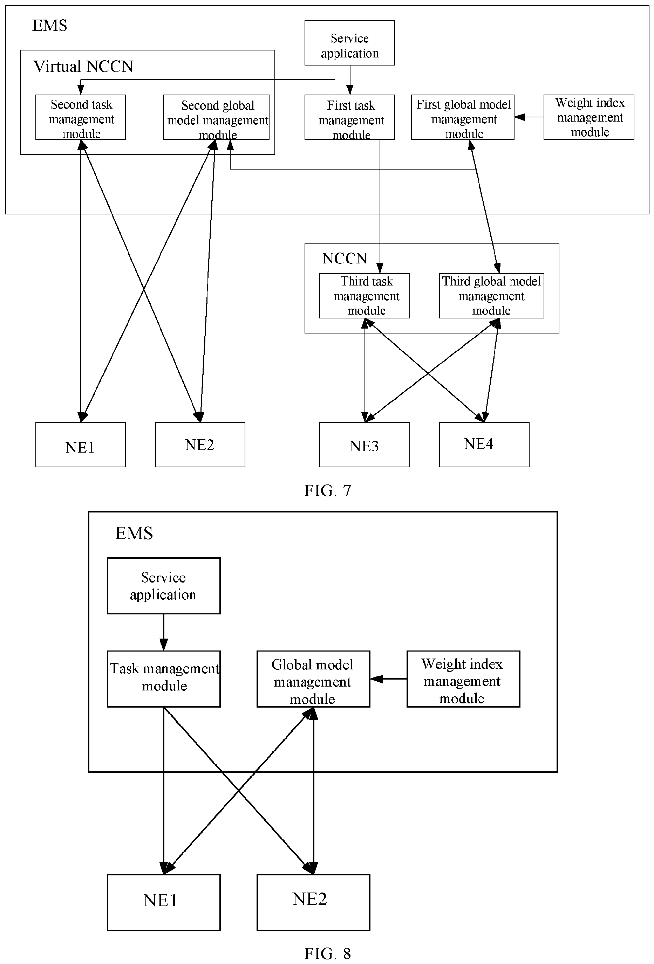

As shown in FIG. 7, a two-layer federated learning system includes: an EMS, one virtual NCCN, one NCCN, and four NEs.

The virtual NCCN is disposed in the EMS, and two NEs, namely NE1 and NE2, are connected to the virtual NCCN; and the NCCN is connected to the EMS, two NEs, namely NE3 and NE4, are connected to the NCCN.

The EMS includes: a service application, a first task management module, a first global model management module, and a weight index management module; the virtual NCCN includes: a second task management module and a second global model management module; and the NCCN includes: a third task management module and a third global model management module.

The NE1, the NE2, the NE3, the NE4, the NCCN, and the virtual NCCN are configured to perform the federated learning procedure of the first layer, and the NCCN, the virtual NCCN, and the EMS are configured to perform the federated learning procedure of the second layer.

A two-layer federated learning method based on the above two-layer federated learning system includes the following operations.

1. For the NE1 and the NE2, which are not connected to the NCCN, the virtual NCCN is set in the EMS according to service features, and the NE1 and the NE2 are connected to the corresponding virtual NCCN according to the service features.

2. A layer-2 weight index corresponding to the EMS is set in the weight index management module of the EMS. For example, if an operator pays attention to the operation profit, the layer-2 weight index may be set to be traffic, or uplink and downlink traffic, or a weighted average of the traffic and the uplink and downlink traffic.

3. Layer-1 weight indexes corresponding to different NCCNs are set in the weight index management module of the EMS according to service features of different fields, and the layer-1 weight indexes corresponding to the different NCCNs may be the same or different. For example, for automatic driving, the corresponding layer-1 weight index is set to be the average delay; for a stadium, the corresponding layer-1 weight index is set to be the traffic; and for a science and technology park, the corresponding layer-1 weight index is set to be the uplink and downlink traffic. In this example, a region to which the virtual NCCN belongs is an automatic driving region, a requirement of the whole network mainly focuses on a time delay, and a layer-1 weight index corresponding to the virtual NCCN is set to be the average delay; and a region to which the NCCN belongs is a stadium region, a requirement of the whole network mainly focuses on the traffic, and a layer-1 weight index corresponding to the NCCN is set as to be the traffic.

4. The service application initiates a service federated learning procedure request to the first task management module, and informs a range of trained base stations. The first task management module acquires the layer-2 weight index, the layer-1 weight index corresponding to the virtual NCCN, and the layer-1 weight index corresponding to the NCCN from the weight index management module of the EMS, places the layer-2 weight index and the layer-1 weight index corresponding to the virtual NCCN in a federated learning task, and issues to the second task management module of the virtual NCCN together; and the first task management module places the layer-2 weight index and the layer-1 weight index corresponding to the NCCN in the federated learning task, and issues to the third task management module of the NCCN together.

5. The second task management module of the virtual NCCN receives the federated learning task carrying the layer-2 weight index and the layer-1 weight index corresponding to the virtual NCCN, places the layer-2 weight index and the layer-1 weight index corresponding to the virtual NCCN in a federated learning task, and issues to the NE1 and the NE2; and the third task management module of the NCCN receives the federated learning task carrying the layer-2 weight index and the layer-1 weight index corresponding to the NCCN, places the layer-2 weight index and the layer-1 weight index corresponding to the NCCN in a federated learning task, and issues to the NE3 and the NE4.

6. The NE1 performs model training with local data according to the federated learning task to obtain a corresponding updated gradient, acquires a layer-1 weight index value corresponding to the NE1 according to the layer-1 weight index corresponding to the virtual NCCN, acquires a layer-2 weight index value corresponding to the NE1 according to the layer-2 weight index, performs privacy protection processing on the updated gradient corresponding to the NE1 through the encryption, the DP or the secret sharing technology to obtain a privacy protected gradient corresponding to the NE1, performs privacy protection processing on the layer-1 weight index value corresponding to the NE1 through the encryption, the DP or the secret sharing technology to obtain a privacy protected layer-1 weight index value corresponding to the NE1, performs privacy protection processing on the layer-2 weight index value corresponding to the NE1 through the encryption, the DP or the secret sharing technology to obtain a privacy protected layer-2 weight index value corresponding to the NE1, and reports the privacy protected gradient corresponding to the NE1, the privacy protected layer-1 weight index value corresponding to the NE1, and the privacy protected layer-2 weight index value corresponding to the NE1 to the second global model management module of the virtual NCCN.

7. The NE2 performs model training with local data according to the federated learning task to obtain a corresponding updated gradient, acquires a layer-1 weight index value corresponding to the NE2 according to the layer-1 weight index corresponding to the virtual NCCN, acquires a layer-2 weight index value corresponding to the NE2 according to the layer-2 weight index, performs privacy protection processing on the updated gradient corresponding to the NE2 through the encryption, the DP or the secret sharing technology to obtain a privacy protected gradient corresponding to the NE2, performs privacy protection processing on the layer-1 weight index value corresponding to the NE2 through the encryption, the DP or the secret sharing technology to obtain a privacy protected layer-1 weight index value corresponding to the NE2, performs privacy protection processing on the layer-2 weight index value corresponding to the NE2 through the encryption, the DP or the secret sharing technology to obtain a privacy protected layer-2 weight index value corresponding to the NE2, and reports the privacy protected gradient corresponding to the NE2, the privacy protected layer-1 weight index value corresponding to the NE2, and the privacy protected layer-2 weight index value corresponding to the NE2 to the second global model management module of the virtual NCCN.

8. The NE3 performs model training with local data according to the federated learning task to obtain a corresponding updated gradient, acquires a layer-1 weight index value corresponding to the NE3 according to the layer-1 weight index corresponding to the NCCN, acquires a layer-2 weight index value corresponding to the NE3 according to the layer-2 weight index, performs privacy protection processing on the updated gradient corresponding to the NE3 through the encryption, the DP or the secret sharing technology to obtain a privacy protected gradient corresponding to the NE3, performs privacy protection processing on the layer-1 weight index value corresponding to the NE3 through the encryption, the DP or the secret sharing technology to obtain a privacy protected layer-1 weight index value corresponding to the NE3, performs privacy protection processing on the layer-2 weight index value corresponding to the NE3 through the encryption, the DP or the secret sharing technology to obtain a privacy protected layer-2 weight index value corresponding to the NE3, and reports the privacy protected gradient corresponding to the NE3, the privacy protected layer-1 weight index value corresponding to the NE3, and the privacy protected layer-2 weight index value corresponding to the NE3 to the third global model management module of the NCCN.

9. The NE4 performs model training with local data according to the federated learning task to obtain a corresponding updated gradient, acquires a layer-1 weight index value corresponding to the NE4 according to the layer-1 weight index corresponding to the NCCN, acquires a layer-2 weight index value corresponding to the NE4 according to the layer-2 weight index, performs privacy protection processing on the updated gradient corresponding to the NE4 through the encryption, the DP or the secret sharing technology to obtain a privacy protected gradient corresponding to the NE4, performs privacy protection processing on the layer-1 weight index value corresponding to the NE4 through the encryption, the DP or the secret sharing technology to obtain a privacy protected layer-1 weight index value corresponding to the NE4, performs privacy protection processing on the layer-2 weight index value corresponding to the NE4 through the encryption, the DP or the secret sharing technology to obtain a privacy protected layer-2 weight index value corresponding to the NE4, and reports the privacy protected gradient corresponding to the NE4, the privacy protected layer-1 weight index value corresponding to the NE4, and the privacy protected layer-2 weight index value corresponding to the NE4 to the third global model management module of the NCCN.

10. The second global model management module of the virtual NCCN performs privacy protection removing processing on the privacy protected gradient corresponding to the NE1 to obtain the updated gradient corresponding to the NE1, performs privacy protection removing processing on the privacy protected layer-1 weight index value corresponding to the NE1 to obtain the layer-1 weight index value corresponding to the NE1, and performs privacy protection removing processing on the privacy protected layer-2 weight index value corresponding to the NE1 to obtain the layer-2 weight index value corresponding to the NE1; the second global model management module of the virtual NCCN performs privacy protection removing processing on the privacy protected gradient corresponding to the NE2 to obtain the updated gradient corresponding to the NE2, performs privacy protection removing processing on the privacy protected layer-1 weight index value corresponding to the NE2 to obtain the layer-1 weight index value corresponding to the NE2, and performs privacy protection removing processing on the privacy protected layer-2 weight index value corresponding to the NE2 to obtain the layer-2 weight index value corresponding to the NE2; the second global model management module of the virtual NCCN calculates an updated layer-1 global gradient corresponding to the virtual NCCN by the formula $GRA_{12}=GRA_{111}KPI_{111}+GRA_{121}KPI_{121}$, where $GRA_{12}$ is the updated layer-1 global gradient corresponding to the virtual NCCN, $GRA_{111}$ is the updated gradient corresponding to the NE1, $KPI_{111}$ is the layer-1 weight index value corresponding to the NE1, $GRA_{121}$ is the updated gradient corresponding to the NE2, and $KPI_{121}$ is the layer-1 weight index value corresponding to the NE2; and the updated layer-1 global gradient corresponding to the virtual NCCN, the layer-2 weight index value corresponding to the NE1, and the layer-2 weight index value corresponding to the NE2 are reported to the first global model management module of the EMS.

11. The third global model management module of the NCCN performs privacy protection removing processing on the privacy protected gradient corresponding to the NE3 to obtain the updated gradient corresponding to the NE3, performs privacy protection removing processing on the privacy protected layer-1 weight index value corresponding to the NE3 to obtain the layer-1 weight index value corresponding to the NE3, and performs privacy protection removing processing on the privacy protected layer-2 weight index value corresponding to the NE3 to obtain the layer-2 weight index value corresponding to the NE3; the third global model management module of the NCCN performs privacy protection removing processing on the privacy protected gradient corresponding to the NE4 to obtain the updated gradient corresponding to the NE4, performs privacy protection removing processing on the privacy protected layer-1 weight index value corresponding to the NE4 to obtain the layer-1 weight index value corresponding to the NE4, and performs privacy protection removing processing on the privacy protected layer-2 weight index value corresponding to the NE4 to obtain the layer-2 weight index value corresponding to the NE4; the third global model management module of the NCCN calculates an updated layer-1 global gradient corresponding to the NCCN by the formula $GRA_{22}=GRA_{231}KPI_{231}+GRA_{241}KPI_{241}$, where $GRA_{22}$ is the updated layer-1 global gradient corresponding to the NCCN, $GRA_{231}$ is the updated gradient corresponding to the NE3, $KPI_{231}$ is the layer-1 weight index value corresponding to the NE3, $GRA_{241}$ is the updated gradient corresponding to the NE4, and $KPI_{241}$ is the layer-1 weight index value corresponding to the NE4; and the updated layer-1 global gradient corresponding to the NCCN, the layer-2 weight index value corresponding to the NE3, and the layer-2 weight index value corresponding to the NE4 are reported to the first global model management module of the EMS.

12. The first global model management module of the EMS calculates a layer-2 weight index value corresponding to the virtual NCCN according to the layer-2 weight index value corresponding to the NE1 and the layer-2 weight index value corresponding to the NE2, calculates a layer-2 weight index value corresponding to the NCCN according to the layer-2 weight index value corresponding to the NE3 and the layer-2 weight index value corresponding to the NE4, calculates a layer-2 global gradient corresponding to the EMS by the formula $GRA_3=GRA_{312}KPI_{312}+GRA_{322}KPI_{322}$, where $GRA_3$ is the layer-2 global gradient corresponding to the EMS, $GRA_{312}$ is the layer-1 global gradient corresponding to the virtual NCCN, $KPI_{312}$ is the layer-2 weight index value corresponding to the virtual NCCN, $GRA_{322}$ is the layer-1 global gradient corresponding to the NCCN, and $KPI_{322}$ is the layer-2 weight index value corresponding to the NCCN, and issues the layer-2 global gradient corresponding to the EMS to the second global model management module of the virtual NCCN and the third global model management module of the NCCN.

13. The second global model management module of the virtual NCCN issues the layer-2 global gradient corresponding to the EMS to the NE1 and the NE2, and the third global model management module of the NCCN issues the layer-2 global gradient corresponding to the EMS to the NE3 and the NE4; and the NE1, the NE2, the NE3, and the NE4 update the models according to the layer-2 global gradient corresponding to the EMS.

Example 2

A first-layer federated learning procedure carried out based on a two-layer federated learning system is illustrated by this example.

As shown in FIG. 7, the two-layer federated learning system includes: the EMS, one virtual NCCN, one NCCN, and four NEs.

The virtual NCCN is disposed in the EMS, and two NEs, namely the NE1 and the NE2, are connected to the virtual NCCN; and the NCCN is connected to the EMS, two NEs, namely the NE3 and the NE4, are connected to the NCCN.

The EMS includes: the service application, the first task management module, the first global model management module, and the weight index management module; the virtual NCCN includes: the second task management module and the second global model management module; and the NCCN includes: the third task management module and the third global model management module.

The NE1, the NE2, the NE3, the NE4, the NCCN, and the virtual NCCN are configured to perform the federated learning procedure of the first layer, and the NCCN, the virtual NCCN, and the EMS are configured to perform the federated learning procedure of the second layer.

A first-layer federated learning method based on the above two-layer federated learning system includes the following operations.

1. For the NE1 and the NE2, which are not connected to the NCCN, the virtual NCCN is set in the EMS according to service features, and the NE1 and the NE2 are connected to the corresponding virtual NCCN according to the service features.

2. A layer-2 weight index corresponding to the EMS is set in the weight index management module of the EMS. For example, if an operator pays attention to the operation profit, the layer-2 weight index may be set to be traffic, or uplink and downlink traffic, or a weighted average of the traffic and the uplink and downlink traffic.

3. Layer-1 weight indexes corresponding to different NCCNs are set in the weight index management module of the EMS according to service features of different fields, and the layer-1 weight indexes corresponding to the different NCCNs may be the same or different. For example, for automatic driving, the corresponding layer-1 weight index is set to be the average delay; for a stadium, the corresponding layer-1 weight index is set to be the traffic; and for a science and technology park, the corresponding layer-1 weight index is set to be the uplink and downlink traffic. In this example, a region to which the virtual NCCN belongs is an automatic driving region, a requirement of the whole network mainly focuses on a time delay, and a layer-1 weight index corresponding to the virtual NCCN is set to be the average delay; and a region to which the NCCN belongs is a stadium region, a requirement of the whole network mainly focuses on the traffic, and a layer-1 weight index corresponding to the NCCN is set as to be the traffic.

4. The service application initiates a service federated learning procedure request to the first task management module, and informs a range of trained base stations. The first task management module acquires the layer-1 weight index corresponding to the virtual NCCN and the layer-1 weight index corresponding to the NCCN from the weight index management module of the EMS, places the layer-1 weight index corresponding to the virtual NCCN in a federated learning task, and issues to the second task management module of the virtual NCCN together; and the first task management module places the layer-1 weight index corresponding to the NCCN in the federated learning task, and issues to the third task management module of the NCCN together.

5. The second task management module of the virtual NCCN receives the federated learning task carrying the layer-1 weight index corresponding to the virtual NCCN, places the layer-1 weight index corresponding to the virtual NCCN in a federated learning task, and issues to the NE1 and the NE2; and the third task management module of the NCCN receives the federated learning task carrying the layer-1 weight index corresponding to the NCCN, places the layer-1 weight index corresponding to the NCCN in a federated learning task, and issues to the NE3 and the NE4.

6. The NE1 performs model training with local data according to the federated learning task to obtain a corresponding updated gradient, acquires a layer-1 weight index value corresponding to the NE1 according to the layer-1 weight index corresponding to the virtual NCCN, performs privacy protection processing on the updated gradient corresponding to the NE1 through the encryption, the DP or the secret sharing technology to obtain a privacy protected gradient corresponding to the NE1, performs privacy protection processing on the layer-1 weight index value corresponding to the NE1 through the encryption, the DP or the secret sharing technology to obtain a privacy protected layer-1 weight index value corresponding to the NE1, and reports the privacy protected gradient corresponding to the NE1 and the privacy protected layer-1 weight index value corresponding to the NE1 to the second global model management module of the virtual NCCN.

7. The NE2 performs model training with local data according to the federated learning task to obtain a corresponding updated gradient, acquires a layer-1 weight index value corresponding to the NE2 according to the layer-1 weight index corresponding to the virtual NCCN, performs privacy protection processing on the updated gradient corresponding to the NE2 through the encryption, the DP or the secret sharing technology to obtain a privacy protected gradient corresponding to the NE2, performs privacy protection processing on the layer-1 weight index value corresponding to the NE2 through the encryption, the DP or the secret sharing technology to obtain a privacy protected layer-1 weight index value corresponding to the NE2, and reports the privacy protected gradient corresponding to the NE2 and the privacy protected layer-1 weight index value corresponding to the NE2 to the second global model management module of the virtual NCCN.

8. The NE3 performs model training with local data according to the federated learning task to obtain a corresponding updated gradient, acquires a layer-1 weight index value corresponding to the NE3 according to the layer-1 weight index corresponding to the NCCN, performs privacy protection processing on the updated gradient corresponding to the NE3 through the encryption, the DP or the secret sharing technology to obtain a privacy protected gradient corresponding to the NE3, performs privacy protection processing on the layer-1 weight index value corresponding to the NE3 through the encryption, the DP or the secret sharing technology to obtain a privacy protected layer-1 weight index value corresponding to the NE3, and reports the privacy protected gradient corresponding to the NE3 and the privacy protected layer-1 weight index value corresponding to the NE3 to the third global model management module of the NCCN.

9. The NE4 performs model training with local data according to the federated learning task to obtain a corresponding updated gradient, acquires a layer-1 weight index value corresponding to the NE4 according to the layer-1 weight index corresponding to the NCCN, performs privacy protection processing on the updated gradient corresponding to the NE4 through the encryption, the DP or the secret sharing technology to obtain a privacy protected gradient corresponding to the NE4, performs privacy protection processing on the layer-1 weight index value corresponding to the NE4 through the encryption, the DP or the secret sharing technology to obtain a privacy protected layer-1 weight index value corresponding to the NE4, and reports the privacy protected gradient corresponding to the NE4 and the privacy protected layer-1 weight index value corresponding to the NE4 to the third global model management module of the NCCN.

10. The second global model management module of the virtual NCCN performs privacy protection removing processing on the privacy protected gradient corresponding to the NE1 to obtain the updated gradient corresponding to the NE1, and performs privacy protection removing processing on the privacy protected layer-1 weight index value corresponding to the NE1 to obtain the layer-1 weight index value corresponding to the NE1; the second global model management module of the virtual NCCN performs privacy protection removing processing on the privacy protected gradient corresponding to the NE2 to obtain the updated gradient corresponding to the NE2, and performs privacy protection removing processing on the privacy protected layer-1 weight index value corresponding to the NE2 to obtain the layer-1 weight index value corresponding to the NE2; the second global model management module of the virtual NCCN calculates an updated layer-1 global gradient corresponding to the virtual NCCN by the formula $GRA_{12}=GRA_{111}KPI_{111}+GRA_{121}KPI_{121}$, where $GRA_{12}$ is the updated layer-1 global gradient corresponding to the virtual NCCN, $GRA_{111}$ is the updated gradient corresponding to the NE1, $KPI_{111}$ is the layer-1 weight index value corresponding to the NE1, $GRA_{121}$ is the updated gradient corresponding to the NE2, and $KPI_{121}$ is the layer-1 weight index value corresponding to the NE2; the updated layer-1 global gradient corresponding to the virtual NCCN is issued the NE1 and the NE2; and the NE1 and the NE2 updates the models according to the updated layer-1 global gradient corresponding to the NCCN.

11. The third global model management module of the NCCN performs privacy protection removing processing on the privacy protected gradient corresponding to the NE3 to obtain the updated gradient corresponding to the NE3, and performs privacy protection removing processing on the privacy protected layer-1 weight index value corresponding to the NE3 to obtain the layer-1 weight index value corresponding to the NE3; the third global model management module of the NCCN performs privacy protection removing processing on the privacy protected gradient corresponding to the NE4 to obtain the updated gradient corresponding to the NE4, and performs privacy protection removing processing on the privacy protected layer-1 weight index value corresponding to the NE4 to obtain the layer-1 weight index value corresponding to the NE4; the third global model management module of the NCCN calculates an updated layer-1 global gradient corresponding to the NCCN by the formula $GRA_{22}=GRA_{231}KPI_{231}+GRA_{241}KPI_{241}$, where $GRA_{22}$ is the updated layer-1 global gradient corresponding to the NCCN, $GRA_{231}$ is the updated gradient corresponding to the NE3, $KPI_{231}$ is the layer-1 weight index value corresponding to the NE3, $GRA_{241}$ is the updated gradient corresponding to the NE4, and $KPI_{241}$ is the layer-1 weight index value corresponding to the NE4; the updated layer-1 global gradient corresponding to the NCCN is issued to the NE3 and the NE4; and the NE3 and the NE4 update the models according to the updated layer-1 global gradient corresponding to the NCCN.

Example 3

Federated learning procedures of two layers carried out based on a two-layer federated learning system are illustrated by this example.

As shown in FIG. 7, the two-layer federated learning system includes: the EMS, one virtual NCCN, one NCCN, and four NEs.

The virtual NCCN is disposed in the EMS, and two NEs, namely the NE1 and the NE2, are connected to the virtual NCCN; and the NCCN is connected to the EMS, two NEs, namely the NE3 and the NE4, are connected to the NCCN.

The EMS includes: the service application, the first task management module, the first global model management module, and the weight index management module; the virtual NCCN includes: the second task management module and the second global model management module; and the NCCN includes: the third task management module and the third global model management module.

The NE1, the NE2, the NE3, the NE4, the NCCN, and the virtual NCCN are configured to perform the federated learning procedure of the first layer, and the NCCN, the virtual NCCN, and the EMS are configured to perform the federated learning procedure of the second layer.

A two-layer federated learning method based on the above two-layer federated learning system includes the following operations.

1. For the NE1 and the NE2, which are not connected to the NCCN, the virtual NCCN is set in the EMS according to service features, and the NE1 and the NE2 are connected to the corresponding virtual NCCN according to the service features.

2. A layer-2 weight index and a layer-1 weight index (referred to as the global weight indexes in this example) are set to be the same in the weight index management module of the EMS. For example, if an operator pays attention to the operation profit, the layer-2 weight index may be set to be traffic, or uplink and downlink traffic, or a weighted average of the traffic and the uplink and downlink traffic.

3. The service application initiates a service federated learning procedure request to the first task management module, and informs a range of trained base stations. The first task management module acquires the global weight indexes from the weight index management module of the EMS, places the global weight indexes in a federated learning task, and issues together to the second task management module of the virtual NCCN and the third task management module of the NCCN.

4. The second task management module of the virtual NCCN receives the federated learning task carrying the global weight indexes, places the global weight indexes in a federated learning task, and issues to the NE1 and the NE2; and the third task management module of the NCCN receives the federated learning task carrying the global weight indexes, places the global weight indexes in a federated learning task, and issues to the NE3 and the NE4.

5. The NE1 performs model training with local data according to the federated learning task to obtain a corresponding updated gradient, acquires a global weight index value corresponding to the NE1 according to the global weight indexes, performs privacy protection processing on the updated gradient corresponding to the NE1 through the encryption, the DP or the secret sharing technology to obtain a privacy protected gradient corresponding to the NE1, performs privacy protection processing on the global weight index value corresponding to the NE1 through the encryption, the DP or the secret sharing technology to obtain a privacy protected global weight index value corresponding to the NE1, and reports the privacy protected gradient corresponding to the NE1, and the privacy protected global weight index value corresponding to the NE1 to the second global model management module of the virtual NCCN.

6. The NE2 performs model training with local data according to the federated learning task to obtain a corresponding updated gradient, acquires a global weight index value corresponding to the NE2 according to the global weight indexes, performs privacy protection processing on the updated gradient corresponding to the NE2 through the encryption, the DP or the secret sharing technology to obtain a privacy protected gradient corresponding to the NE2, performs privacy protection processing on the global weight index value corresponding to the NE2 through the encryption, the DP or the secret sharing technology to obtain a privacy protected global weight index value corresponding to the NE2, and reports the privacy protected gradient corresponding to the NE2 and the privacy protected global weight index value corresponding to the NE2 to the second global model management module of the virtual NCCN.

7. The NE3 performs model training with local data according to the federated learning task to obtain a corresponding updated gradient, acquires a global weight index value corresponding to the NE3 according to the global weight indexes, performs privacy protection processing on the updated gradient corresponding to the NE3 through the encryption, the DP or the secret sharing technology to obtain a privacy protected gradient corresponding to the NE3, performs privacy protection processing on the global weight index value corresponding to the NE3 through the encryption, the DP or the secret sharing technology to obtain a privacy protected global weight index value corresponding to the NE3, and reports the privacy protected gradient corresponding to the NE3 and the privacy protected global weight index value corresponding to the NE3 to the third global model management module of the NCCN.

8. The NE4 performs model training with local data according to the federated learning task to obtain a corresponding updated gradient, acquires a global weight index value corresponding to the NE4 according to the global weight indexes corresponding to the NCCN, performs privacy protection processing on the updated gradient corresponding to the NE4 through the encryption, the DP or the secret sharing technology to obtain a privacy protected gradient corresponding to the NE4, performs privacy protection processing on the global weight index value corresponding to the NE4 through the encryption, the DP or the secret sharing technology to obtain a privacy protected global weight index value corresponding to the NE4, and reports the privacy protected gradient corresponding to the NE4 and the privacy protected global weight index value corresponding to the NE4 to the third global model management module of the NCCN.

9. The second global model management module of the virtual NCCN performs privacy protection removing processing on the privacy protected gradient corresponding to the NE1 to obtain the updated gradient corresponding to the NE1, and performs privacy protection removing processing on the privacy protected global weight index value corresponding to the NE1 to obtain the global weight index value corresponding to the NE1; the second global model management module of the virtual NCCN performs privacy protection removing processing on the privacy protected gradient corresponding to the NE2 to obtain the updated gradient corresponding to the NE2, and performs privacy protection removing processing on the privacy protected global weight index value corresponding to the NE2 to obtain the global weight index value corresponding to the NE2; the second global model management module of the virtual NCCN calculates an updated layer-1 global gradient corresponding to the virtual NCCN by the formula $GRA_{12}=GRA_{111}KPI_{111}+GRA_{121}$, where $GRA_{12}$ is the updated layer-1 global gradient corresponding to the virtual NCCN, $GRA_{111}$ is the updated gradient corresponding to the NE1, $KPI_{111}$ is the global weight index value corresponding to the NE1, $GRA_{121}$ is the updated gradient corresponding to the NE2, and $KPI_{121}$ is the global weight index value corresponding to the NE2; and the updated layer-1 global gradient corresponding to the virtual NCCN, the global weight index value corresponding to the NE1, and the global weight index value corresponding to the NE2 are reported to the first global model management module of the EMS.

10. The third global model management module of the NCCN performs privacy protection removing processing on the privacy protected gradient corresponding to the NE3 to obtain the updated gradient corresponding to the NE3, and performs privacy protection removing processing on the privacy protected global weight index value corresponding to the NE3 to obtain the global weight index value corresponding to the NE3; the third global model management module of the NCCN performs privacy protection removing processing on the privacy protected gradient corresponding to the NE4 to obtain the updated gradient corresponding to the NE4, and performs privacy protection removing processing on the privacy protected global weight index value corresponding to the NE4 to obtain the global weight index value corresponding to the NE4; the third global model management module of the NCCN calculates an updated layer-1 global gradient corresponding to the NCCN by the formula $GRA_{22}=GRA_{231}KPI_{231}+GRA_{241}KPI_{241}$, where $GRA_{22}$ is the updated layer-1 global gradient corresponding to the NCCN, $GRA_{231}$ is the updated gradient corresponding to the NE3, $KPI_{231}$ is the global weight index value corresponding to the NE3, $GRA_{241}$ is the updated gradient corresponding to the NE4, and $KPI_{241}$ is the global weight index value corresponding to the NE4; and the updated layer-1 global gradient corresponding to the NCCN, the global weight index value corresponding to the NE3, and the global weight index value corresponding to the NE4 are reported to the first global model management module of the EMS.

11. The first global model management module of the EMS calculates a global weight index value corresponding to the virtual NCCN according to the global weight index value corresponding to the NE1 and the global weight index value corresponding to the NE2, calculates a global weight index value corresponding to the NCCN according to the global weight index value corresponding to the NE3 and the global weight index value corresponding to the NE4, calculates a layer-2 global gradient corresponding to the EMS by the formula $GRA_3=GRA_{312}KPI_{312}+GRA_{322}KPI_{322}$, where $GRA_3$ is the layer-2 global gradient corresponding to the EMS, $GRA_{312}$ is the layer-1 global gradient corresponding to the virtual NCCN, $KPI_{312}$ is the global weight index value corresponding to the virtual NCCN, $GRA_{322}$ is the layer-1 global gradient corresponding to the NCCN, and $KPI_{322}$ is the global weight index value corresponding to the NCCN, and issues the layer-2 global gradient corresponding to the EMS to the second global model management module of the virtual NCCN and the third global model management module of the NCCN.

12. The second global model management module of the virtual NCCN issues the layer-2 global gradient corresponding to the EMS to the NE1 and the NE2, and the third global model management module of the NCCN issues the layer-2 global gradient corresponding to the EMS to the NE3 and the NE4; and the NE1, the NE2, the NE3, and the NE4 update the models according to the layer-2 global gradient corresponding to the EMS.

Example 4

A first-layer federated learning procedure carried out based on a two-layer federated learning system is illustrated by this example.

As shown in FIG. 7, the two-layer federated learning system includes: the EMS, one virtual NCCN, one NCCN, and four NEs.

The virtual NCCN is disposed in the EMS, and two NEs, namely the NE1 and the NE2, are connected to the virtual NCCN; and the NCCN is connected to the EMS, two NEs, namely the NE3 and the NE4, are connected to the NCCN.

The EMS includes: the service application, the first task management module, the first global model management module, and the weight index management module; the virtual NCCN includes: the second task management module and the second global model management module; and the NCCN includes: the third task management module and the third global model management module.

The NE1, the NE2, the NE3, the NE4, the NCCN, and the virtual NCCN are configured to perform the federated learning procedure of the first layer, and the NCCN, the virtual NCCN, and the EMS are configured to perform the federated learning procedure of the second layer.

A first-layer federated learning method based on the above two-layer federated learning system includes the following operations.

1. For the NE1 and the NE2, which are not connected to the NCCN, the virtual NCCN is set in the EMS according to service features, and the NE1 and the NE2 are connected to the corresponding virtual NCCN according to the service features.

2. A layer-2 weight index and a layer-1 weight index (referred to as the global weight indexes in this example) are set to be the same in the weight index management module of the EMS. For example, if an operator pays attention to the operation profit, the layer-2 weight index may be set to be traffic, or uplink and downlink traffic, or a weighted average of the traffic and the uplink and downlink traffic.

3. The service application initiates a service federated learning procedure request to the first task management module, and informs a range of trained base stations. The first task management module acquires the global weight indexes from the weight index management module of the EMS, places the global weight indexes in a federated learning task, and issues together to the second task management module of the virtual NCCN and the third task management module of the NCCN.

4. The second task management module of the virtual NCCN receives the federated learning task carrying the global weight indexes, places the global weight indexes in a federated learning task, and issues to the NE1 and the NE2; and the third task management module of the NCCN receives the federated learning task carrying the global weight indexes, places the global weight indexes in a federated learning task, and issues to the NE3 and the NE4.

5. The NE1 performs model training with local data according to the federated learning task to obtain a corresponding updated gradient, acquires a global weight index value corresponding to the NE1 according to the global weight indexes, performs privacy protection processing on the updated gradient corresponding to the NE1 through the encryption, the DP or the secret sharing technology to obtain a privacy protected gradient corresponding to the NE1, performs privacy protection processing on the global weight index value corresponding to the NE1 through the encryption, the DP or the secret sharing technology to obtain a privacy protected global weight index value corresponding to the NE1, and reports the privacy protected gradient corresponding to the NE1, and the privacy protected global weight index value corresponding to the NE1 to the second global model management module of the virtual NCCN.

6. The NE2 performs model training with local data according to the federated learning task to obtain a corresponding updated gradient, acquires a global weight index value corresponding to the NE2 according to the global weight indexes, performs privacy protection processing on the updated gradient corresponding to the NE2 through the encryption, the DP or the secret sharing technology to obtain a privacy protected gradient corresponding to the NE2, performs privacy protection processing on the global weight index value corresponding to the NE2 through the encryption, the DP or the secret sharing technology to obtain a privacy protected global weight index value corresponding to the NE2, and reports the privacy protected gradient corresponding to the NE2 and the privacy protected global weight index value corresponding to the NE2 to the second global model management module of the virtual NCCN.

7. The NE3 performs model training with local data according to the federated learning task to obtain a corresponding updated gradient, acquires a global weight index value corresponding to the NE3 according to a global weight index corresponding to the NCCN, performs privacy protection processing on the updated gradient corresponding to the NE3 through the encryption, the DP or the secret sharing technology to obtain a privacy protected gradient corresponding to the NE3, performs privacy protection processing on the global weight index value corresponding to the NE3 through the encryption, the DP or the secret sharing technology to obtain a privacy protected global weight index value corresponding to the NE3, and reports the privacy protected gradient corresponding to the NE3 and the privacy protected global weight index value corresponding to the NE3 to the third global model management module of the NCCN.

8. The NE4 performs model training with local data according to the federated learning task to obtain a corresponding updated gradient, acquires a global weight index value corresponding to the NE4 according to the global weight index corresponding to the NCCN, performs privacy protection processing on the updated gradient corresponding to the NE4 through the encryption, the DP or the secret sharing technology to obtain a privacy protected gradient corresponding to the NE4, performs privacy protection processing on the global weight index value corresponding to the NE4 through the encryption, the DP or the secret sharing technology to obtain a privacy protected global weight index value corresponding to the NE4, and reports the privacy protected gradient corresponding to the NE4 and the privacy protected global weight index value corresponding to the NE4 to the third global model management module of the NCCN.

9. The second global model management module of the virtual NCCN performs privacy protection removing processing on the privacy protected gradient corresponding to the NE1 to obtain the updated gradient corresponding to the NE1, and performs privacy protection removing processing on the privacy protected global weight index value corresponding to the NE1 to obtain the global weight index value corresponding to the NE1; the second global model management module of the virtual NCCN performs privacy protection removing processing on the privacy protected gradient corresponding to the NE2 to obtain the updated gradient corresponding to the NE2, and performs privacy protection removing processing on the privacy protected global weight index value corresponding to the NE2 to obtain the global weight index value corresponding to the NE2; the second global model management module of the virtual NCCN calculates an updated layer-1 global gradient corresponding to the virtual NCCN by the formula $GRA_{12}=GRA_{111}KPI_{111}+GRA_{121}$, where $GRA_{12}$ is the updated layer-1 global gradient corresponding to the virtual NCCN, $GRA_{111}$ is the updated gradient corresponding to the NE1, $KPI_{111}$ is the global weight index value corresponding to the NE1, $GRA_{121}$ is the updated gradient corresponding to the NE2, and $KPI_{121}$ is the global weight index value corresponding to the NE2; the updated layer-1 global gradient corresponding to the virtual NCCN is issued to the NE1 and the NE2; and the NE1 and the NE2 update the models according to the updated layer-1 global gradient corresponding to the virtual NCCN.

10. The third global model management module of the NCCN performs privacy protection removing processing on the privacy protected gradient corresponding to the NE3 to obtain the updated gradient corresponding to the NE3, and performs privacy protection removing processing on the privacy protected global weight index value corresponding to the NE3 to obtain the global weight index value corresponding to the NE3; the third global model management module of the NCCN performs privacy protection removing processing on the privacy protected gradient corresponding to the NE4 to obtain the updated gradient corresponding to the NE4, and performs privacy protection removing processing on the privacy protected global weight index value corresponding to the NE4 to obtain the global weight index value corresponding to the NE4; the third global model management module of the NCCN calculates an updated layer-1 global gradient corresponding to the NCCN by the formula $GRA_{22}=GRA_{231}KPI_{231}+GRA_{241}KPI_{241}$, where $GRA_{22}$ is the updated layer-1 global gradient corresponding to the NCCN, $GRA_{231}$ is the updated gradient corresponding to the NE3, $KPI_{231}$ is the global weight index value corresponding to the NE3, $GRA_{241}$ is the updated gradient corresponding to the NE4, and $KPI_{241}$ is the global weight index value corresponding to the NE4; the updated layer-1 global gradient corresponding to the NCCN is issued to the NE3 and the NE4; and the NE3 and the NE4 update the models according to the updated layer-1 global gradient corresponding to the NCCN.

Example 5

A federated learning procedure of a single layer carried out based on a single-layer federated learning system is illustrated by this example.

As shown in FIG. 8, a single-layer federated learning system includes: an EMS, NE1, and NE2; and both the NE1 and the NE2 are connected to the EMS.

The EMS includes: a service application, a task management module, a global model management module, and a weight index management module.

The EMS, the NE1, and the NE2 are configured to perform the federated learning procedure of a single layer.

A single-layer federated learning method based on the above single-layer federated learning system includes the following operations.

1. A global weight index is set in the weight index management module of the EMS. For example, if an operator pays attention to the operation profit, the global weight index may be set to be traffic, or uplink and downlink traffic, or a weighted average of the traffic and the uplink and downlink traffic.

2. The service application initiates a service federated learning procedure request to the task management module, and informs a range of trained base stations. The task management module acquires the global weight index from the weight index management module of the EMS, places the global weight index in a federated learning task, and issues to the NE1 and the NE2 together.

3. The NE1 performs model training with local data according to the federated learning task to obtain a corresponding updated gradient, acquires a global weight index value corresponding to the NE1 according to the global weight index, performs privacy protection processing on the updated gradient corresponding to the NE1 through the encryption, the DP or the secret sharing technology to obtain a privacy protected gradient corresponding to the NE1, performs privacy protection processing on the global weight index value corresponding to the NE1 through the encryption, the DP or the secret sharing technology to obtain a privacy protected global weight index value corresponding to the NE1, and reports the privacy protected gradient corresponding to the NE1, and the privacy protected global weight index value corresponding to the NE1 to the global model management module of the EMS.

4. The NE2 performs model training with local data according to the federated learning task to obtain a corresponding updated gradient, acquires a global weight index value corresponding to the NE2 according to the global weight index, performs privacy protection processing on the updated gradient corresponding to the NE2 through the encryption, the DP or the secret sharing technology to obtain a privacy protected gradient corresponding to the NE2, performs privacy protection processing on the global weight index value corresponding to the NE1 through the encryption, the DP or the secret sharing technology to obtain a privacy protected global weight index value corresponding to the NE2, and reports the privacy protected gradient corresponding to the NE2, and the privacy protected global weight index value corresponding to the NE2 to the global model management module of the EMS.

5. The global model management module of the EMS performs privacy protection removing processing on the privacy protected gradient corresponding to the NE1 to obtain the updated gradient corresponding to the NE1, and performs privacy protection removing processing on the privacy protected global weight index value corresponding to the NE1 to obtain the global weight index value corresponding to NE 1; the global model management module of the EMS performs privacy protection removing processing on the privacy protected gradient corresponding to the NE2 to obtain the updated gradient corresponding to the NE2, and performs privacy protection removing processing on the privacy protected global weight index value corresponding to the NE2 to obtain the global weight index value corresponding to NE 2; the global model management module of the EMS calculates an updated global gradient by the formula $GRA_3=GRA_1KPI_1+GRA_2KPI_2$,

where $GRA_3$ is the updated global gradient, $GRA_1$ is the updated gradient corresponding to the NE1, $KPI_1$ is the global weight index value corresponding to the NE1, $GRA_2$ is the updated gradient corresponding to the NE2, and $KPI_2$ is the global weight index value corresponding to NE 2; the updated global gradient is issued to the NE1 and the NE2; and the NE1 and the NE2 update the models according to the updated global gradient.

In the fourth aspect, an embodiment of the present disclosure provides an electronic device, including:

at least one processor; and
a memory having stored thereon at least one program which, when executed by the at least one processor, causes the at least one processor to implement any one of the above federated learning methods.

The processor is a device having data processing capability, and includes, but is not limited to, a Central Processing Unit (CPU); and the memory is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH).

In some embodiments, the processor and the memory are connected to each other through a bus, and then are connected to other components of a computing device.

In the fifth aspect, an embodiment of the present disclosure provides a computer-readable storage medium having a computer program stored thereon; when the computer program is executed by a processor, any one of the above federated learning methods is performed.

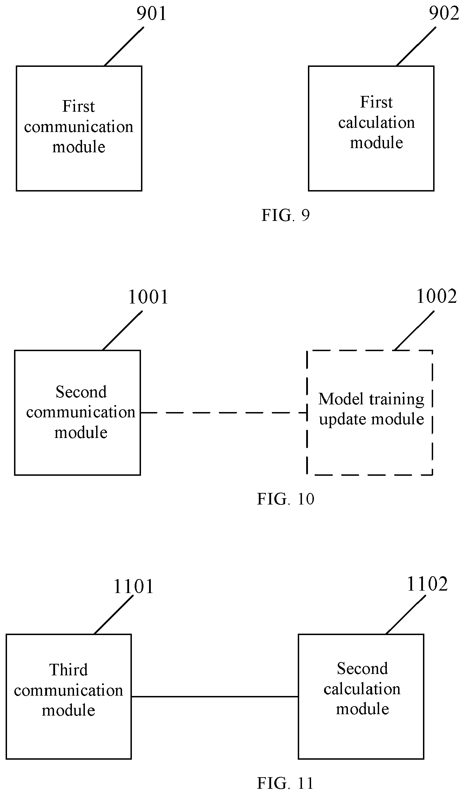

FIG. 9 is a block diagram of a federated learning apparatus according to another embodiment of the present disclosure.

In the sixth aspect, with reference to FIG. 9, another embodiment of the present disclosure provides a federated learning apparatus (e.g., a layer-i node, with i being any integer greater than or equal to 2 and less than or equal to (N-1), and (N-1) being the number of layers of federated learning), including:

a first communication module 901 configured to receive a corresponding first gradient reported by at least one layer-(i-1) node under a layer-i node; and
a first calculation module 902 configured to calculate an updated layer-(i-1) global gradient corresponding to the layer-i node according to the first gradient corresponding to the at least one layer-(i-1) node and a layer-(i-1) weight index corresponding to the layer-i node, with the layer-(i-1) weight index being a communication index.

In some exemplary embodiments, the first communication module 901 is further configured to:
receive a federated learning task sent by a layer-(i+1) node, and issue the federated learning task to the at least one layer-(i-1) node under the layer-i node.

In some exemplary embodiments, the communication index includes at least one of: an average delay, traffic, uplink and downlink traffic, or a weighted average of the traffic and the uplink and downlink traffic.

In some exemplary embodiments, the weight indexes corresponding to different nodes in the same layer are the same or different, and the weight indexes corresponding to different nodes in different layers are the same or different.

In some exemplary embodiments, if i is 2, the first gradient corresponding to the layer-(i-1) node is an updated gradient obtained by performing model training by the layer-(i-1) node according to the federated learning task; and
if i is greater than 2 and less than or equal to (N-1), the first gradient corresponding to the layer-(i-1) node is an updated layer-(i-2) global gradient corresponding to the layer-(i-1) node.

In some exemplary embodiments, the first calculation module 902 is specifically configured to:
acquire a layer-(i-1) weight index value corresponding to the at least one layer-(i-1) node according to the layer-(i-1) weight index corresponding to the layer-i node, calculate a weighted average of the first gradient corresponding to the at least one layer-(i-1) node with the layer-(i-1) weight index value corresponding to the at least one layer-(i-1) node taken as a weight, and obtain the updated layer-(i-1) global gradient corresponding to the layer-i node.

In some exemplary embodiments, the first communication module 901 is further configured to:
issue the updated layer-(i-1) global gradient corresponding to the layer-i node to the layer-(i-1) node.

In some exemplary embodiments, the first communication module 901 is further configured to:
report the updated layer-(i-1) global gradient corresponding to the layer-i node to the layer-(i+1) node, receive any one of an updated layer-i global gradient to an updated layer-(N-1) global gradient sent by the layer-(i+1) node, and issue the any one of the updated layer-i global gradient to the updated layer-(N-1) global gradient to the layer-(i-1) node.

A specific implementation process of the federated learning apparatus is the same as that of the federated learning method provided by the above embodiments, and thus will not be repeated here.

FIG. 10 is a block diagram of a federated learning apparatus according to another embodiment of the present disclosure.

In the seventh aspect, with reference to FIG.

10, another embodiment of the present disclosure provides a federated learning apparatus (e.g., a layer-1 node), including:

a second communication module 1001 configured to report an updated gradient corresponding to a layer-1 node to a layer-2 node, and receive an updated layer-j global gradient sent by the layer-2 nodes, with the layer-j global gradient being obtained through calculation according to a first gradient corresponding to at least one layer-j node and a layer-j weight index corresponding to a layer-(j+1) node, the layer-j weight index being a communication index, j being any integer greater than or equal to 1 and less than or equal to (N-1), and (N-1) being the number of layers of federated learning.

In some exemplary embodiments, the federated learning apparatus further includes:

a model training update module 1002 configured to update a model according to the updated layer-j global gradient.

In some example embodiments, the second communication module 1001 is further configured to:

receive a federated learning task sent by the layer-2 node.

In some exemplary embodiments, if j is 1, the first gradient corresponding to the layer-j node is an updated gradient corresponding to the layer-j node; and if j is greater than 1 and less than or equal to (N-1), the first gradient corresponding to the layer-j node is an updated layer-(j-1) global gradient corresponding to the layer-j node.

In some exemplary embodiments, the communication index includes at least one of: an average delay, traffic, uplink and downlink traffic, or a weighted average of the traffic and the uplink and downlink traffic.

In some exemplary embodiments, the weight indexes corresponding to different nodes in the same layer are the same or different, and the weight indexes corresponding to different nodes in different layers are the same or different.

A specific implementation process of the federated learning apparatus is the same as that of the federated learning method provided by the embodiments, and thus will not be repeated here.

FIG. 11 is a block diagram of a federated learning apparatus according to another embodiment of the present disclosure.

In the eighth aspect, with reference to FIG. 11, another embodiment of the present disclosure provides a federated learning apparatus (e.g., a layer-N node, with (N-1) being the number of layers of federated learning), including:

a third communication module 1101 configured to receive a corresponding layer-(N-2) global gradient reported by at least one layer-(N-1) node under a layer-N node; and
a second calculation module 1102 configured to calculate a layer-(N-1) global gradient corresponding to the layer-N node according to the layer-(N-2) global gradient corresponding to the at least one layer-(N-1) node and a layer-(N-1) weight index, with the layer-(N-1) weight index being a communication index.

In some exemplary embodiments, the third communication module 1101 is further configured to: issue a federated learning task to the at least one layer-(N-1) node under the layer-N node.

In some exemplary embodiments, the third communication module 1101 is further configured to: issue the layer-(N-1) global gradient corresponding to the layer-N node to the at least one layer-(N-1) node.

In some exemplary embodiments, the communication index includes at least one of: an average delay, traffic, uplink and downlink traffic, or a weighted average of the traffic and the uplink and downlink traffic.

A specific implementation process of the federated learning apparatus is the same as that of the federated learning method provided by the above embodiments, and thus will not be repeated here.

In the ninth aspect, another embodiment of the present disclosure provides a federated learning system, including:

a layer-N node or a layer-N subsystem configured to receive a corresponding layer-(N-2) global gradient reported by at least one layer-(N-1) node under the layer-N node or the layer-N subsystem, calculate a layer-(N-1) global gradient corresponding to the layer-N node or the layer-N subsystem according to the layer-(N-2) global gradient corresponding to the at least one layer-(N-1) node and a layer-(N-1) weight index which is a communication index, and issue the layer-(N-1) global gradient corresponding to the layer-N node or the layer-N subsystem to the at least one layer-(N-1) node, with (N-1) being the number of layers of federated learning;
a layer-i node configured to receive a corresponding first gradient reported by at least one layer-(i-1) node under the layer-i node, and calculate an updated layer-(i-1) global gradient corresponding to the layer-i node according to the first gradient corresponding to the at least one layer-(i-1) node and a layer-(i-1) weight index corresponding to the layer-i node, with the layer-(i-1) weight index being a communication index;
the layer-i node further configured to:

issue the updated layer-(i-1) global gradient corresponding to the layer-i node to the layer-(i-1) node; or report the updated layer-(i-1) global gradient corresponding to the layer-i node to a layer-(i+1) node; and receive any one of an updated layer-i global gradient to an updated layer-(N-1) global gradient sent by the layer-(i+1) node, and issue the any one of the updated layer-i global gradient to the updated layer-(N-1) global gradient to the layer-(i-1) node; and

a layer-1 node configured to report an updated gradient corresponding to the layer-1 node to a layer-2 node, and receive an updated layer-j global gradient sent by the layer-2 node, with the layer-j global gradient being obtained through calculation according to a first gradient corresponding to at least one layer-j node and a layer-j weight index corresponding to a layer-(j+1) node, the layer-j weight index being a communication index, j being any integer greater than or equal to 1 and less than or equal to (N-1), and (N-1) being the number of layers of federated learning.

In some exemplary embodiments, the layer-1 node is further configured to: perform model training to obtain the updated gradient corresponding to the layer-1 node, and update a model according to the updated layer-j global gradient.

In some exemplary embodiments, the communication index includes at least one of: an average delay, traffic, uplink and downlink traffic, or a weighted average of the traffic and the uplink and downlink traffic.

In some exemplary embodiments, the weighting indexes corresponding to different nodes in the same layer are the same or different, and the weighting indexes corresponding to different nodes in different layers are the same or different.

In some exemplary embodiments, if i is 2, the first gradient corresponding to the layer-(i-1) node is an updated gradient obtained by performing model training by the layer-(i-1) node according to a federated learning task; and

if i is greater than 2 and less than or equal to (N-1), the first gradient corresponding to the layer-(i-1) node is an updated layer-(i-2) global gradient corresponding to the layer-(i-1) node.

In some exemplary embodiments, if j is 1, the first gradient corresponding to the layer-j node is an updated gradient corresponding to the layer-j node; and if j is greater than 1 and less than or equal to (N-1), the first gradient corresponding to the layer-j node is an updated layer-(j-1) global gradient corresponding to the layer-j node.

In some exemplary embodiments, the layer-i node is specifically configured to calculate the updated layer-(i-1) global gradient corresponding to the layer-i node according to the first gradient corresponding to the at least one layer-(i-1) node and the layer-(i-1) weight index corresponding to the layer-i node in a following way:

acquiring a layer-(i-1) weight index value corresponding to the at least one layer-(i-1) node according to the layer-(i-1) weight index corresponding to the layer-i node; and

calculating a weighted average of the first gradient corresponding to the at least one layer-(i-1) node with the layer-(i-1) weight index value corresponding to the at least one layer-(i-1) node taken as a weight, and obtaining the updated layer-(i-1) global gradient corresponding to the layer-i node.

In some exemplary embodiments, the layer-i node is further configured to: issue the updated layer-(i-1) global gradient corresponding to the layer-i node to the layer-(i-1) node.

In some exemplary embodiments, the layer-i node is further configured to:

report the updated layer-(i-1) global gradient corresponding to the layer-i node to the layer-(i+1) node; and

receive the any one of the updated layer-i global gradient to the updated layer-(N-1) global gradient sent by the layer-(i+1) node, and issue the any one of the updated layer-i global gradient to the updated layer-(N-1) global gradient to the layer-(i-1) node.

A specific implementation process of the federated learning system is the same as that of the federated learning method provided by the above embodiments, and thus will not be repeated here.

It should be understood by those of ordinary skill in the art that the functional modules/units in all or some of the operations, systems, and devices disclosed in the above method may be implemented as software, firmware, hardware, or suitable combinations thereof. If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other storage technology, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

**Claims**

1. A federated learning method applied to a layer-i node, with i being any integer greater than or equal to 2 and less than or equal to (N-1), and (N-1) being the number of layers of federated learning, comprising:

receiving a first gradient corresponding to and reported by at least one layer-(i-1) node under a layer-i node; and
calculating an updated layer-(i-1) global gradient corresponding to the layer-i node according to the first gradient corresponding to the at least one layer-(i-1) node and a layer-(i-1) weight index corresponding to the layer-i node, wherein the layer-(i-1) weight index is a communication index.

2. The federated learning method of claim 1, wherein the communication index comprises at least one of: an average delay, traffic, uplink and downlink traffic, or a weighted average of the traffic and the uplink and downlink traffic.

3. The federated learning method of claim 1, wherein weight indexes corresponding to different nodes in a same layer are the same or different, and weight indexes corresponding to different nodes in different layers are the same or different.

4. The federated learning method of claim 1, wherein if i is 2, the first gradient corresponding to the layer-(i-1) node is an updated gradient obtained by performing model training by the layer-(i-1) node; and
if i is greater than 2 and less than or equal to (N-1), the first gradient corresponding to the layer-(i-1) node is an updated layer-(i-2) global gradient corresponding to the layer-(i-1) node.

5. The federated learning method of claim 1, wherein calculating the updated layer-(i-1) global gradient corresponding to the layer-i node according to the first gradient corresponding to the at least one layer-(i-1) node and the layer-(i-1) weight index corresponding to the layer-i node comprises:

acquiring a layer-(i-1) weight index value corresponding to the at least one layer-(i-1) node according to the layer-(i-1) weight index corresponding to the layer-i node; and
calculating a weighted average of the first gradient corresponding to the at least one layer-(i-1) node with the layer-(i-1) weight index value corresponding to the at least one layer-(i-1) node taken as a weight, and obtaining the updated layer-(i-1) global gradient corresponding to the layer-i node.

6. The federated learning method of any one of claims 1 to 5, after calculating the updated layer-(i-1) global gradient corresponding to the layer-i node according to the first gradient corresponding to the at least one layer-(i-1) node and the layer-(i-1) weight index corresponding to the layer-i node, further comprising:
issuing the updated layer-(i-1) global gradient corresponding to the layer-i node to the layer-(i-1) node.

7. The federated learning method of any one of claims 1 to 5, after calculating the updated layer-(i-1) global gradient corresponding to the layer-i node according to the first gradient corresponding to the at least one layer-(i-1) node and the layer-(i-1) weight index corresponding to the layer-i node, further comprising:

reporting the updated layer-(i-1) global gradient corresponding to the layer-i node to a layer-(i+1) node; and
receiving any one of an updated layer-i global gradient to an updated layer-(N-1) global gradient sent by the layer-(i+1) node, and issuing the any one of the updated layer-i global gradient to the updated layer-(N-1) global gradient to the layer-(i-1) node.

8. A federated learning method applied to a layer-1 node, comprising:

reporting an updated gradient corresponding to the layer-1 node to a layer-2 node; and

receiving an updated layer-j global gradient sent from layer-2 node, wherein the layer-j global gradient is obtained through calculation according to a first gradient corresponding to at least one layer-j node and a layer-j weight index corresponding to a layer-(j+1) node; the layer-j weight index is a communication index; and j is any integer greater than or equal to 1 and less than or equal to (N-1), and (N-1) is the number of layers of federated learning.

9. The federated learning method of claim 8, wherein if j is 1, the first gradient corresponding to the layer-j node is an updated gradient corresponding to the layer-j node; and
if j is greater than 1 and less than or equal to (N-1), the first gradient corresponding to the layer-j node is an updated layer-(j-1) global gradient corresponding to the layer-j node.

10. The federated learning method of claim 8, wherein the communication index comprises at least one of: an average delay, traffic, uplink and downlink traffic, or a weighted average of the traffic and the uplink and downlink traffic.

11. The federated learning method of claim 8, weight indexes corresponding to different nodes in a same layer are the same or different, and weight indexes corresponding to different nodes in different layers are the same or different.

12. A federated learning method applied to a layer-N node or a layer-N subsystem, with (N-1) being the number of layers of federated learning, comprising:

receiving a layer-(N-2) global gradient corresponding to and reported by at least one layer-(N-1) node under the layer-N node or the layer-N subsystem; and
calculating a layer-(N-1) global gradient corresponding to the layer-N node or the layer-N subsystem according to the layer-(N-2) global gradient corresponding to the at least one layer-(N-1) node and a layer-(N-1) weight index, wherein the layer-(N-1) weight index is a communication index.

13. The federated learning method of claim 12, wherein the communication index comprises at least one of: an average delay, traffic, uplink and downlink traffic, or a weighted average of the traffic and the uplink and downlink traffic.

14. An electronic device, comprising:

at least one processor; and
a memory having stored thereon at least one program which, when executed by the at least one processor, causes the at least one processor to implement the federated learning method of any one of claims 1 to 13.

15. A computer-readable storage medium having a computer program stored thereon, wherein, when the computer program is executed by a processor, the federated learning method of any one of claims 1 to 13 is implemented.

16. A federated learning system, comprising:

a layer-N node or a layer-N subsystem configured to receive a layer-(N-2) global gradient corresponding to and reported by at least one layer-(N-1) node under the layer-N node or the layer-N subsystem, calculate a layer-(N-1) global gradient corresponding to the layer-N node or the layer-N subsystem according to the layer-(N-2) global gradient corresponding to the at least one layer-(N-1) node and a layer-(N-1) weight index which is a communication index, and issue the layer-(N-1) global gradient corresponding to the layer-N node or the layer-N subsystem to the at least one layer-(N-1) node, wherein (N-1) is the number of layers of federated learning;
a layer-i node configured to receive a first gradient corresponding to and reported by at least one layer-(i-1) node under the layer-i node, and calculate an updated layer-(i-1) global gradient corresponding to the layer-i node according to the first gradient corresponding to the at least one layer-(i-1) node and a layer-(i-1) weight index corresponding to the layer-i node, wherein the layer-(i-1) weight index is a communication index,
the layer-i node being further configured to:

issue the updated layer-(i-1) global gradient corresponding to the layer-i node to the layer-(i-1) node; or report the updated layer-(i-1) global gradient corresponding to the layer-i node to a layer-(i+1) node; and receive any one of an updated layer-i global gradient to an updated layer-(N-1) global gradient sent by the layer-(i+1) node, and issue the any one of the updated layer-i global gradient to the updated layer-(N-1) global gradient to the layer-(i-1) node; and
a layer-1 node configured to report an updated gradient corresponding to the layer-1 node to a layer-2 node, and receive an updated layer-j global gradient sent from the layer-2 node; wherein the layer-j global gradient is obtained through calculation according to a first gradient corresponding to at least one layer-j node and a layer-j weight index corresponding to a layer-(j+1) node; the layer-j weight index is a communication index; and j is any integer greater than or equal to 1 and less than or equal to (N-1), and (N-1) is the number of layers of federated learning.

Layer-N node or
layer-N subsystem

Layer-(N-1) node

...

Layer-1 node

FIG. 1

```
┌─────────────────────────┐
│     Layer-2 node or     │
│    layer-2 subsystem    │
└─────────────────────────┘
              │
              ▼
      ┌─────────────────┐
      │┌─────────────────┐
      ││┌─────────────────┐
      │││                 │
      └││  Layer-1 node   │
       └│                 │
        └─────────────────┘
```

FIG. 2

```
┌─────────────────────────┐
│     Layer-3 node or     │
│    layer-3 subsystem    │
└─────────────────────────┘
              │
              ▼
      ┌─────────────────┐
      │┌─────────────────┐
      ││┌─────────────────┐
      │││                 │
      └││  Layer-2 node   │
       └│                 │
        └─────────────────┘
              │
              ▼
      ┌─────────────────┐
      │┌─────────────────┐
      ││┌─────────────────┐
      │││                 │
      └││  Layer-1 node   │
       └│                 │
        └─────────────────┘
```

FIG. 3

402

Receive a federated learning task sent from the layer-(i+1)
node, and issue the same to at least one layer-(i-1) node

400

Receive a first gradient corresponding to and reported by
at least one layer-(i-1) node under the layer-i node

401

Calculate an updated layer-(i-1) global gradient corresponding
to the layer-i node according to the first gradient corresponding
to the at least one layer-(i-1) node and a layer-(i-1) weight
index corresponding to the layer-i node, the layer-(i-1) weight
index being a communication index

FIG. 4

500

Obtain an updated gradient corresponding to the layer-1 node through
model training, and report the same to the layer-2 node

501

Receive an updated layer-j global gradient sent from the layer-2 node,
and update a model according to the updated layer-j global gradient,
wherein the layer-j global gradient is obtained through calculation
according to a first gradient corresponding to at least one layer-j node
and a layer-j weight index corresponding to the layer-(j+1) node; the
layer-j weight index is a communication index; and j is any integer
greater than or equal to 1 and less than or equal to (N-1), and (N-1) is
the number of layers of federated learning

FIG. 5

602

Issue a federated learning task to at least one layer-(N-1) node under the layer-N node or the layer-N subsystem

600

Receive a layer-(N-2) global gradient corresponding to and reported by at least one layer-(N-1) node under the layer-N node or the layer-N subsystem

601

Calculate a layer-(N-1) global gradient corresponding to the layer-N node or the layer-N subsystem according to the layer-(N-2) global gradient corresponding to the at least one layer-(N-1) node and a layer-(N-1) weight index, with the layer-(N-1) weight index being a communication index

603

Issue the layer-(N-1) global gradient corresponding to the layer-N node or the layer-N subsystem to the at least one layer-(N-1) node

FIG. 6

FIG. 7

FIG. 8

901

First
communication
module

902

First
calculation
module

FIG. 9

1001

Second
communication
module

1002

Model training
update module

FIG. 10

1101

Third
communication
module

1102

Second
calculation
module

FIG. 11

## INTERNATIONAL SEARCH REPORT

| | International application No. |
|---|---|
| | **PCT/CN2021/106469** |

**A.    CLASSIFICATION OF SUBJECT MATTER**

G06F 21/60(2013.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNKI, CNPAT, WPI, EPODOC: 联邦, 学习, 层, 节点, 梯度, 权重, 通信, 指标, 更新, 全局, federation, learning, layer, node, gradient, weight, communication, index, update, global

**C.    DOCUMENTS CONSIDERED TO BE RELEVANT**

| Category* | Citation of document, with indication, where appropriate, of the relevant passages | Relevant to claim No. |
|---|---|---|
| A | CN 110728376 A (SHENZHEN QIANHAI WEBANK CO., LTD.) 24 January 2020 (2020-01-24)<br>    claim 1 | 1-16 |
| A | CN 111062493 A (SHENZHEN QIANHAI WEBANK CO., LTD.) 24 April 2020 (2020-04-24)<br>    entire document | 1-16 |
| A | US 2015324690 A1 (MICROSOFT CORPORATION) 12 November 2015 (2015-11-12)<br>    entire document | 1-16 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2021** | **28 September 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/106469**

| Patent document cited in search report | | | Publication date (day/month/year) | Patent family member(s) | Publication date (day/month/year) |
|---|---|---|---|---|---|
| CN | 110728376 | A | 24 January 2020 | None | |
| CN | 111062493 | A | 24 April 2020 | None | |
| US | 2015324690 | A1 | 12 November 2015 | None | |

Form PCT/ISA/210 (patent family annex) (January 2015)

**REFERENCES CITED IN THE DESCRIPTION**

**Patent documents cited in the description**

- CN 202010695940